# EUROPEAN PATENT APPLICATION

(11) **EP 1 510 162 A2**
(43) Date of publication of application: **02.03.2005**
(21) Application number: 04021312.6
(22) Date of filing: 28.02.2000
(51) Int. Cl.: A47J 43/044, A47J 39/00

(54) **Food blending apparatus**

(30) Priority: 26.02.1999 GB 9904347; 24.03.1999 GB 9906650; 22.05.1999 GB 9911874; 22.07.1999 GB 9917075; 08.01.2000 GB 0000297
(62) Divisional of application: 00906516.0
(71) Applicant: McGILL TECHNOLOGY LIMITED, Addington, West Malling, Kent ME19 5TW (GB)
(72) Inventor: McGill, Shane Robert, McGill Technology Limited, Addington, West Malling, Kent ME19 5TW (GB)
(74) Representative: Cowan, David Robert

(57) **Abstract**

The invention is concerned with blending food in a container (130) in which the food is cooled to a storage temperature. A blending location is provided at which the container (130) is mounted for a blending element to be drivingly connected to a motor to effect a blending operation. In the same blending position the food product is arranged to be heated by microwave heating directed towards the food product in the container (130) whereby to heat the product to a blending temperature.

## Description

This invention relates to food mixing/blending apparatus and to a method of mixing/blending and heating food product within a container. The invention has particular application to milkshakes but can be used with other food products which need to be mixed and/or blended, particularly those which need to be dispensed ready for consumption at or near the location where mixing is effected.

In earlier patent specification PCT/GB98/03193 there has been described food blending apparatus and a method of blending food within a container. Specification DE-U-8807534 discloses a food blending container.

An object of the invention is to provide improved mixing/blending container and apparatus and a method of mixing blended food within a container. Hereinafter the term "blending" will be used but it should be understood to include an action which involves mixing of food product.

According to one aspect of the invention, there is provided a method of blending food product in a container in which the container is charged with food product which is cooled to a storage temperature, the container is fitted with a blending element located in the container, a closure member is applied to the top of the container to seal the container, the container is located in a blending position, the food product is subjected to microwave energy to bring the food product from the storage temperature to the desired temperature for blending, in said blending position, the blending element is releasably located in driving engagement with a drive motor extending through and adjacent to the closure member to blend the food product in the container, and the blended food product is dispensed from the container.

Conveniently the microwave energy is directed outwardly from an internal region of the container.

The container and the drive may be relatively moveable to engage and disengage drive to the blending element.

The container may be filled with product which is frozen and the container of frozen product is transported to a dispensing location with which the product is heated and blended for the customer to consume out of the container.

Preferably, the microwave energy is directed from at least two different directions towards the container and its food contents.

According to another aspect, the invention provides blending apparatus for blending food product comprising a container chargeable with food product, the food product being coolable in the container to a storage temperature, a blending element fitted to the container within the container, a closure member arranged to be applied to the container to seal the container, an assembly of the container, the blending element and the closure member comprising a container assembly, a support for the container assembly including a drive motor drivingly engageable with the blending element through the closure member, and microwave heating means, whereby the assembly is locatable on the support in a blending position and, in said position, the microwave heating means in operable to heat the food product to bring it from the storage temperature to a blending temperature, and the food product is blended in the container by operation of the blending element in said position, and the assembly is removable from the support for dispensing of food product. with reference to the drawings, in which:
Fig 1 is a vertical section through a container assembly,
Fig 2 is a section corresponding to that of Fig 1 of the container of the assembly of Fig 1,
Fig 3A is a side elevation of blending means for the assembly of Fig 1,
Fig 3B is a side elevation of the blending means of Fig 3A in the direction 3 in Fig 3A,
Fig 4A is a cross section through a closure for the container assembly of Fig 1,
Fig 4B is a view in the direction 4 in Fig 4A,
Figs 5, 6, 7 & 8 show the sequence of operations for assembling and filling the container assembly of Fig 1,
Fig 9 is a side elevation of a blending mechanism for the container assembly of Fig 1,
Fig 9A is a side elevation of another form of blending mechanism,
Fig 10 is a side elevation of apparatus for storing and dispensing container assemblies,
Fig 10A is a side elevation corresponding to Fig 10 of modified apparatus,
Fig 11 is a plan view of a carousel arrangement for the apparatus of Fig 10,
Fig 12 is a side elevation of a storage system for container assemblies,
Fig 13 is a plan view on the line 13-13 in Fig 12,
Fig 14 is a scrap view, in section, of an alternative form of container assembly,
Fig 15 is a plan view of blending means of the assembly of Fig 14,
Fig 16 is a side view of alternative blending elements,
Fig 17A and 17B are views in direction 17 in Fig 16,
Fig 18 is a vertical section through apparatus for heating and blending food in the container of Fig 1, in one position,
Fig 19 is a view corresponding to Fig 18 in another position,
Fig 20 is a side elevation of a further embodiment of the invention, in one position,
Fig 21 is a view corresponding to Fig 20 in another position,
Fig 22A and 22B are plan views of two stages in loading a container,
Fig 23 is a side elevation of another container loading arrangement,
Fig 24 is a plan view of the arrangement of Fig 23,
Figs 25, 26 and 27 show, in vertical section three stages in a heating and blending operation,
Fig 28 shows a view in direction 28 in Fig 25,
Fig 29 shows a side view of another form of apparatus for a heating and blending operation,
Figs 30-34 show pictorial views of another apparatus in various stages of use,
Fig 35 is a vertical section through another embodiment of blending container having a blending element,
Fig 36 is a vertical section through blending apparatus utilising the container of Fig 35,
Fig 37 is a vertical section, corresponding to Fig 36, showing the container in a blending position,
Fig 38 is a perspective view of an alternative form of blending container,
Fig 39 is a side elevation of a stack of blending elements,
Fig 40 is a stack of lids for the container,
Fig 41 is a side elevation, in section, of a stack of supporting members,
Fig 42 is a side elevation in section of a stack of container members of the container of Fig 38,
Fig 43 is a perspective view of a further embodiment of blending and heating apparatus,
Figure 44 is a view corresponding to Fig 43 with the main housing omitted,
Fig 45 is a view corresponding to Figs 43 and 44 with the housing cover omitted,
Fig 46 is a view corresponding to Figs 43, 44 and 45 showing an internal locator for the housing,
Fig 47 is a perspective view of a container for the apparatus of Figs 43-46,
Fig 48 is a view of the container of Fig 47 with the closure member omitted, and
Fig 49 is a vertical section through the container of Figs 47 and 48.

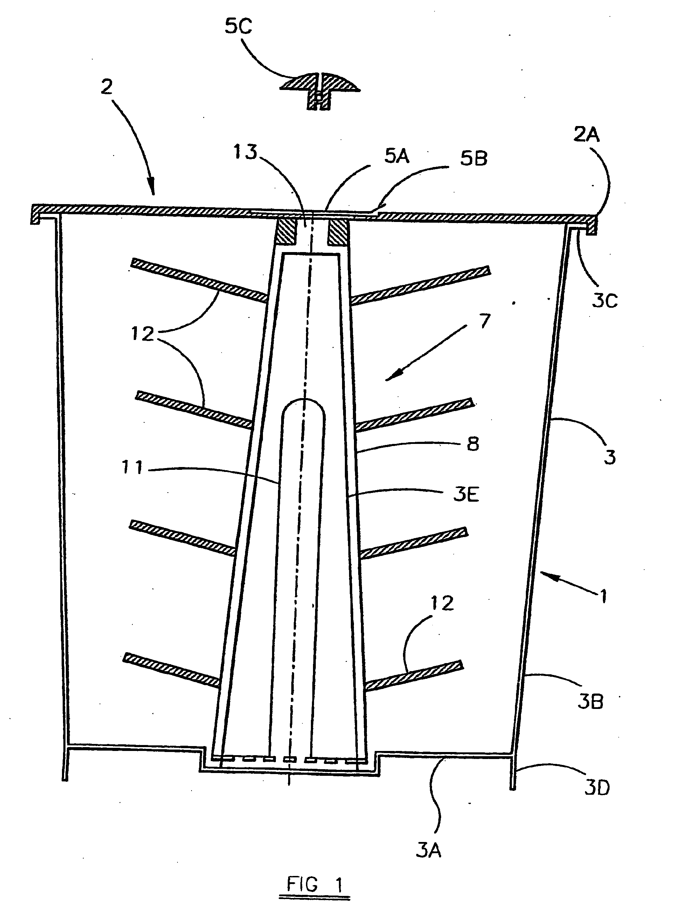

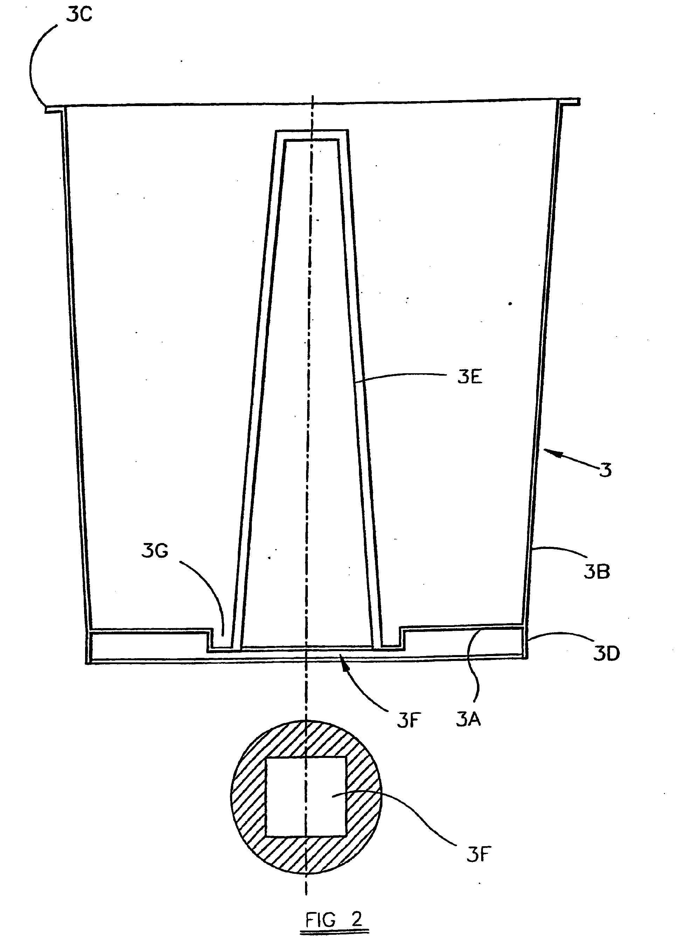

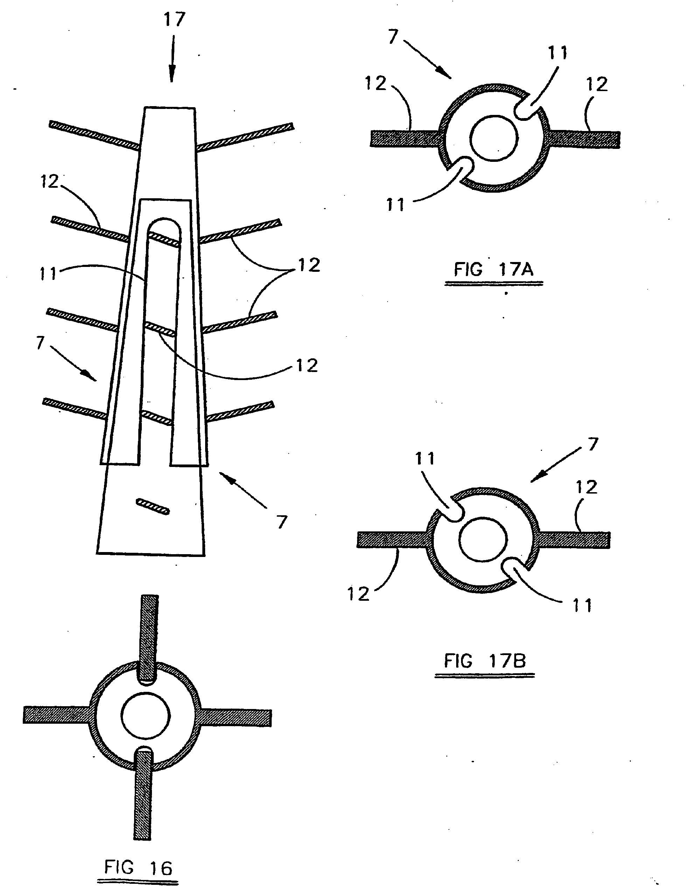

Referring to Figs 1-17 of the drawings there is shown a container assembly 1 for use in blending apparatus which comprises a body portion 3 (Fig 2) consisting of a plastics vessel in the shape of a beaker having a base 3A, upwardly diverging, circular cross section side walls 3B and an upper edge 3c of the container. The container is nestable with other containers, when empty, by location of the base through the upper opening of another container. A handle may be provided on the side wall 3B extending outwards from the upper end of the body, above the level of a container with which it is nested, the handle also being nestable.

In its base 3A the container is formed with a peripheral downwardly projection portion 3D and centrally of the base 3A is formed a hollow, upwardly extending location member 3E. The member 3E is closed at its upper end and is of truncated cone shape having an opening 3F at its lower end accessible from the outside of the container. The opening 3F has a rectangular shape as shown in the lower part of Fig 2 for location of the container on a support, to be described but may be of any other suitable shape. An annular recess 3G extends around the member 3E and opens into the internal volume of the container. The location member 3E may not be hollow, in some applications, and may be formed of foamed plastics.

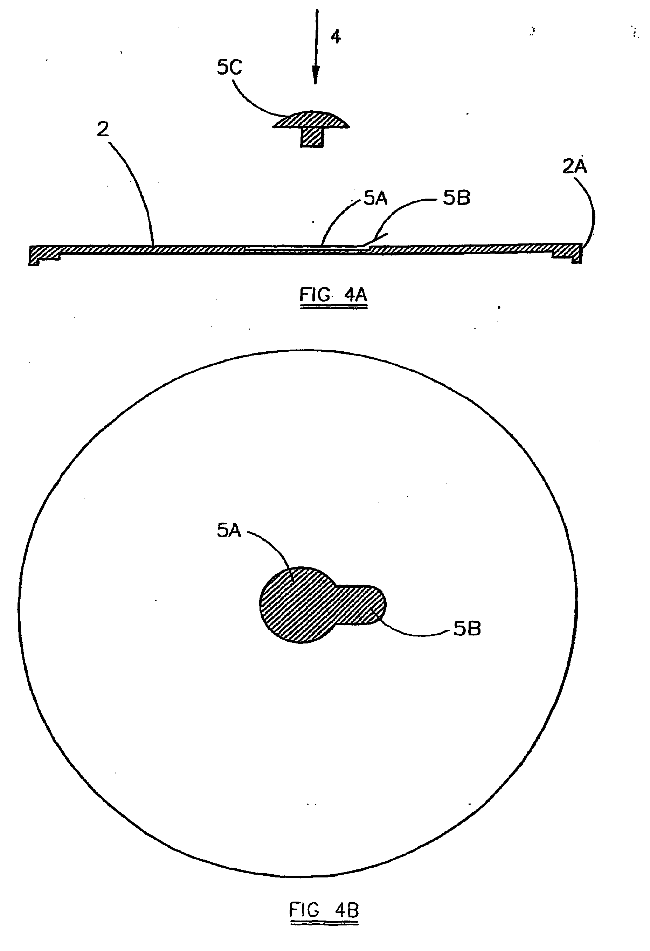

The container body or vessel 3 is provided with a closure member 2 (Figs 4A and 4B) constituting a lid arranged to fit over the upper end of the body 3 over the upper edge 3C and to close the opening at the top of the body. The lid 2 is generally circular having an outer portion 2A which fits over the upper edge 3C of the body to be sealingly engaged over the opening. This may be by a clip arrangement, by heat sealing, or by any other suitable means for securing the lid 2 on the body 3. The container body 3 may also, or instead, have its upper opening sealed with a diaphragm or film heat sealed thereto. The lid (when fitted) may have cutters (not shown) on its underside to cut an opening in the diaphragm for a straw.

At the centre of the lid is formed an opening 5 through which drive means, to be described, extends during a blending operation. After the container has been filled and during transport prior to a blending operation the opening is sealed with a removable seal 5A usually adhesively attached to the lid 2 and having a tab 5B by which it is peeled off. Instead of the seal 5A the lid may have a moulded-in, removable section. A bung 5C may be located in the opening 5 after the sealing member 5A has been removed and after a blending operation. Alternatively the removable section may be relocated in the opening after blending.

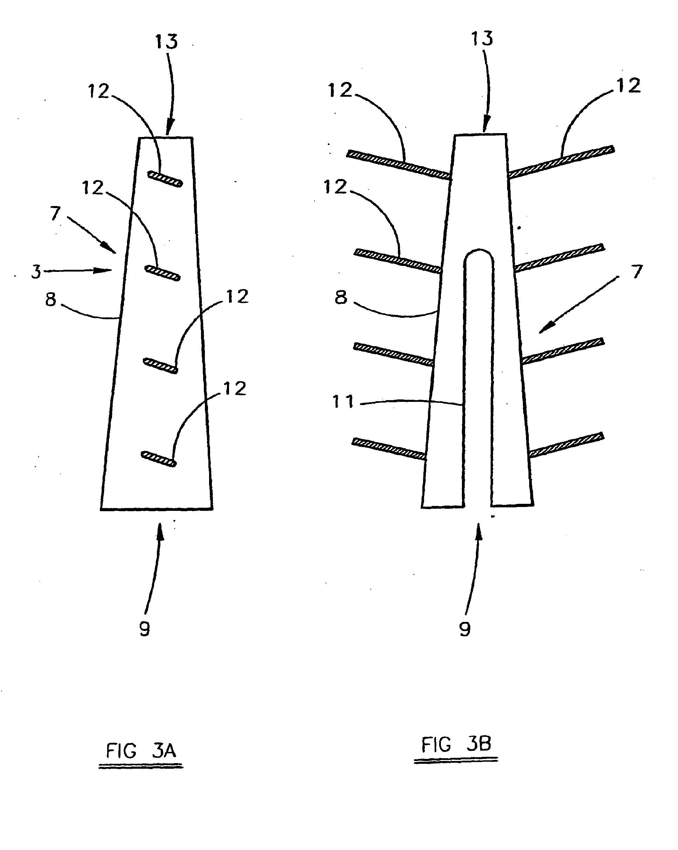

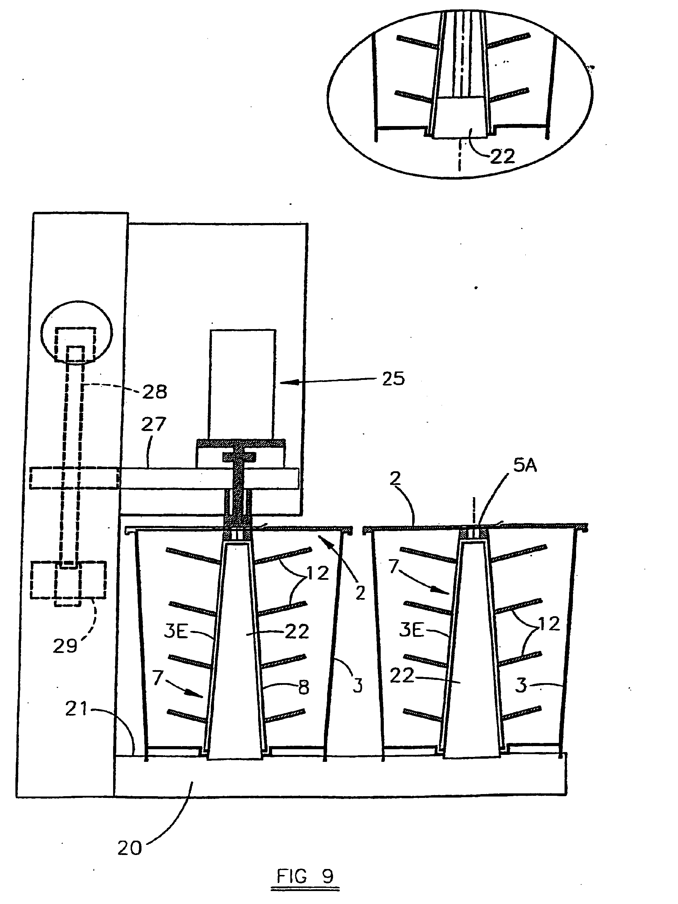

The assembly also includes a blending element 7 (Figs 3A and 3B) which is arranged for location in the container over the location means 3E and for rotation relative to the container and location means. The blending element 7 comprises a hollow, circular section body 8 open at its lower end 9 and being of generally frustro conical shape arranged to fit over the correspondingly shaped location member 3E. Impeller blades 12 are located in pairs axially spaced along the element 7 and extending outwardly from the central axis in the radial direction. The blades 12 in each pair extend from opposite sides of the element 7 and are angled to the horizontal to impart a blending action on the contents of the container. The blending element 7 is provided with longitudinal slots at opposite sides extending partway along the length of element from its lower end, which slots are to accommodate the blades 12 when the element 7 is nested with other elements, as seen in Fig 6. Instead of the blades 12 being arranged as shown, blades at different positions may have different shapes and orientation for different functions e.g. blending and circulation. Moreover the blades 12 may fold over and avoid the need for the slots to nest the elements, or the blades may be small enough to be received in another element. If the product requires stirring rather than vigorous blending, stirring paddles may replace the blades

At the upper end of the element 7 there is provided an opening 13 the inner sides of which are shaped to receive, in driving engagement therewith, drive means for driving the blending element during a blending operation.

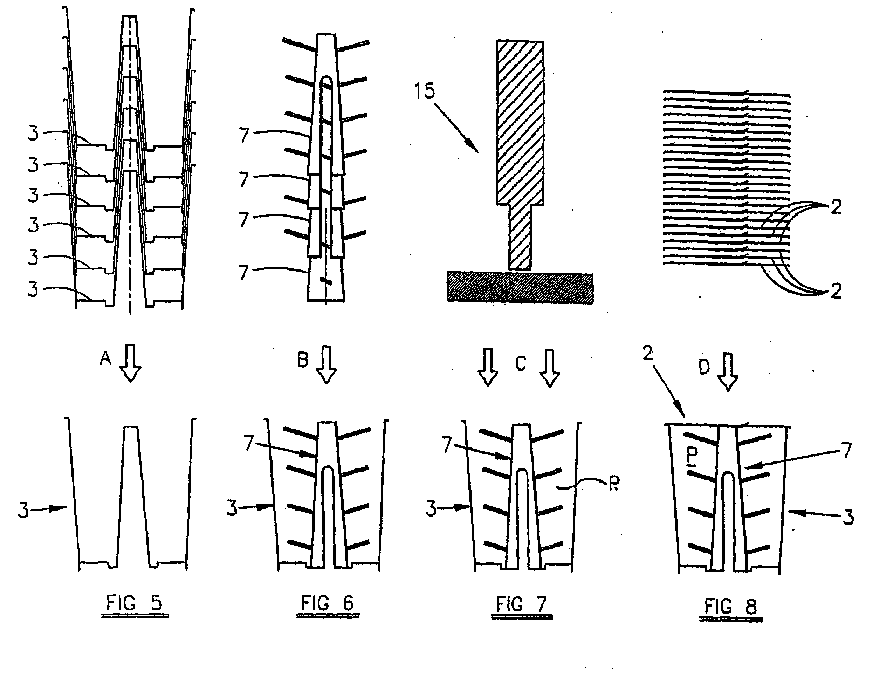

Referring now particularly to Figs 5-8 there will be described the sequence for assembling and filling the container assembly. In Fig 5 there is shown in the upper part a stack of nested container bodies 3 from which the lower container body has been released. The body of Fig 5 is then assembled with a blending element 7 from a stack of such elements which are nested together as seen in Fig 6. The blending element 7 is located onto the location member 3E of the container 3. In effecting this assembly the lower edge of the element 7 enters the annular recess 3G and may be locked in said recess to inhibit axial movement of the element 7 whilst retaining the ability ofthe element 7 to be rotated relative to the body 3. However, the annular recess may be omitted.

The assembled container body 3 and element 7 is then charged or filled with product to be dispensed by filling means shown diagrammatically at 15 in Fig 7. The filling means 15 may be of any convenient kind and can be a filling machine ofknown form which fills the body 3 with the product P up to the desired level within the body 3.

After filling a closure member 2 is detached from a stack of closure members as seen in Fig 8 and is secured to the upper opening of the body 3 to seal the contents ofthe container. The closure member 2 may be in the form of a membrane heat-sealed to the upper edge of the body of the container with or without a further lid. The membrane may be punctured to gain access for the drive means and for a straw. The membrane if fitted as well as a lid, will be applied before the lid fitting step.

After filling and fitting of the closure member the container may be overwrapped with film which may be heat-shrunk around a part or all of the container, the film carrying printed material and being pierceable to access the drive and straw into the container.

This completes the assembly and charging of the container with product and the container may be filled aseptically and/or may be frozen or semi-frozen subsequent to filling. Alternatively the filled container may be chilled.

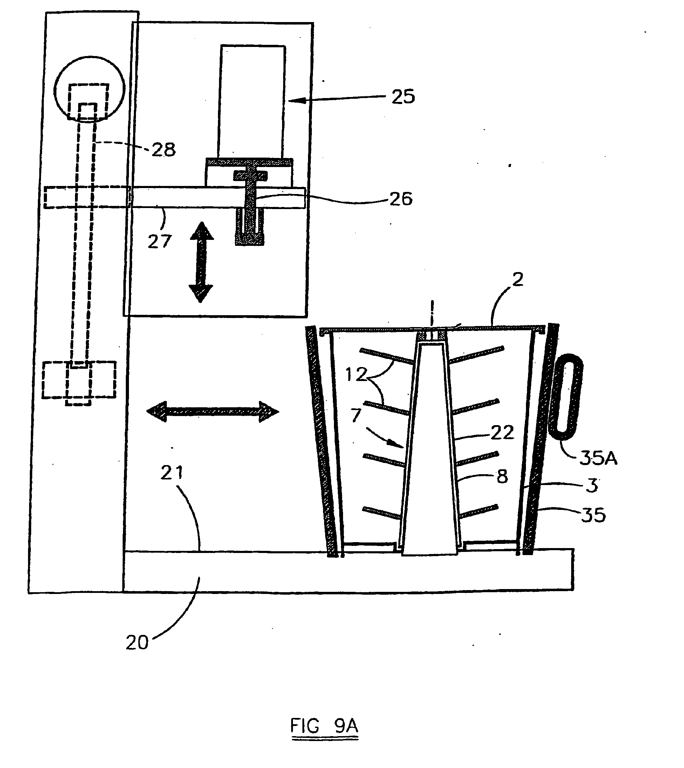

The filled containers are transported and stored in their frozen or chilled condition or at ambient temperature until it is required to consume the product. Before consumption frozen or semi-frozen product within the container assembly may be tempered i.e. brought to a higher blending temperature, for example in a tempering cabinet, and is then subjected to a blending operation which is performed in a blending apparatus such as shown in Fig 9.

The blending apparatus comprises a support for the container assembly which includes a seating surface 21 from which there is an upwardly extending location element 22 which is located into the opening 3F of the location member 3E of the container 3. The location element 22 has an outer profile corresponding to the profile of the opening 3F so that the container assembly is secured against rotation relative to the location element 22. The location element 22 may extend towards the upper end of the opening 3F or, as shown in the scrap view in Fig 9, the location element 22 may extend only along the lower end of the opening 3F. The provision of the location element 22 fixes the container assembly securely to the apparatus during blending. Howeverthe element 22 may be omitted and the container assembly held by the engagement of the drive means or by interfitting portions of the surface 21 with the container base. The location element 22 may be heated so as to heat the product in the container and assist the blending action.

Once in position the container assembly lies directly below a drive motor 25 having a drive output shaft 26 arranged for driving engagement with the blending element 7 by location in the opening 13. The motor 25 and associated shaft 26 is moveably mounted through an arm 27 guided along a guide rod 28 between an operational position as shown in Fig 9 and a raised position in which the shaft 26 is clear of the container assembly. Movement between these positions may be by a further drive motor 29 by which the shaft 28 is rotated to move the arm 27 along the shaft by threaded engagement therewith by a linear drive, or otherwise. Alternatively the arm 27 may be manually moveable between an operative and inoperative position. As a further alternative the container may be lifted up to locate with the drive.

The drive motor 25 and shaft 26 are operated to rotate the blending element 7 relative to the body 3 at a suitable speed and for a suitable duration, for the blades 12 to blend the product P within the container. Due to the blades 12 being located throughout the height of the container the whole contents of the container are quickly blended. The speed of rotation may vary during a blending sequence and the drive direction may be reversible. Instead of a drive motor the element 7 may be manually rotated.

In one arrangement the containers, after blending, are moved from the blending position to an adjacent position, as shown in Fig 9, for removal from the location element 22 and subsequent consumption. Consumption may be through a straw which is inserted into the container through a weakened area of the closure 2. Alternatively the closure 2 may be removed from the container body 3. As a further alteration a further lid may be fitted at this stage.

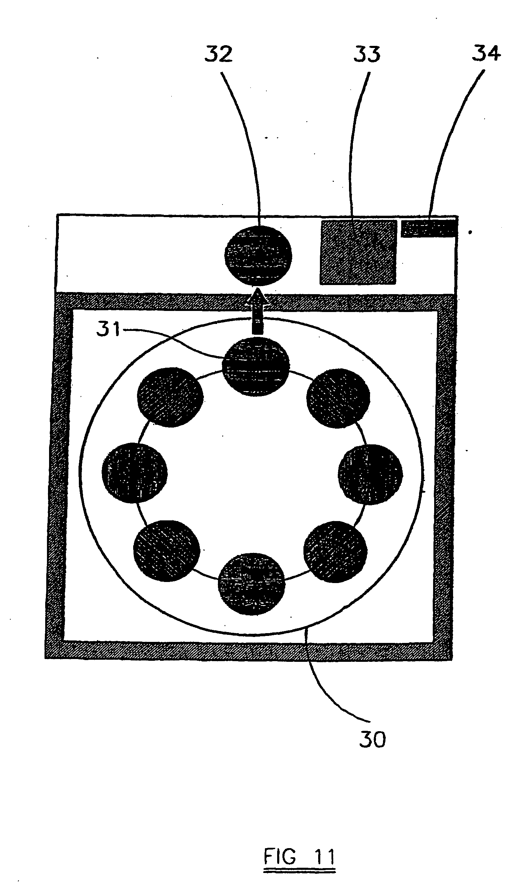

The blending mechanism may incorporate a carousel 30 (Fig 11) on which a plurality of filled containers are located rotatable about the central axis. At one position 31 of the containers on the carousel 30 the containers are in a blending position; that is arranged for driving engagement with a drive shaft. After blending the blended container is moved to a delivery or collection point 32 which lies adjacent a dispenser 33 for straws. There may also be a mechanism 34 for operating the carousel and dispensing mechanism for self service situations. After the container at 31 has been blended the carousel rotates to bring another container to the blending position and the location from which the blended container has been released is filled with a fresh filled container.

Referring to Fig 9A a similar blending apparatus to that of Fig 9 is shown. In this case the container assembly is located within a support 35 having a handle 35A during blending and, after blending, the assembly is lifted with the support 35 off the apparatus. The support 35 may be heated to raise the temperature of product in the container. The support may also be hinged to the base to permit entry and removal of the container.

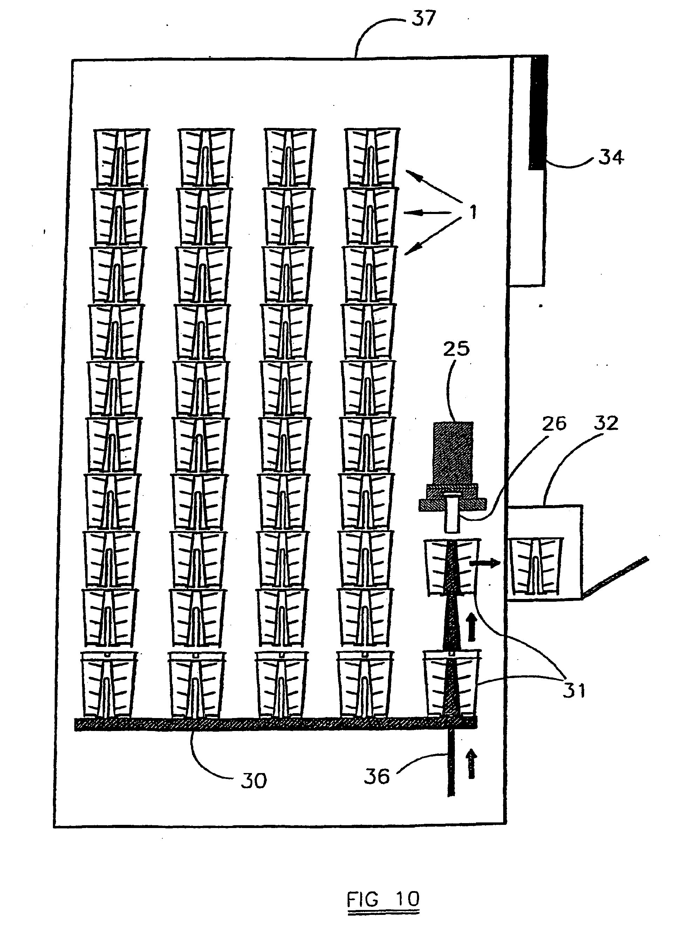

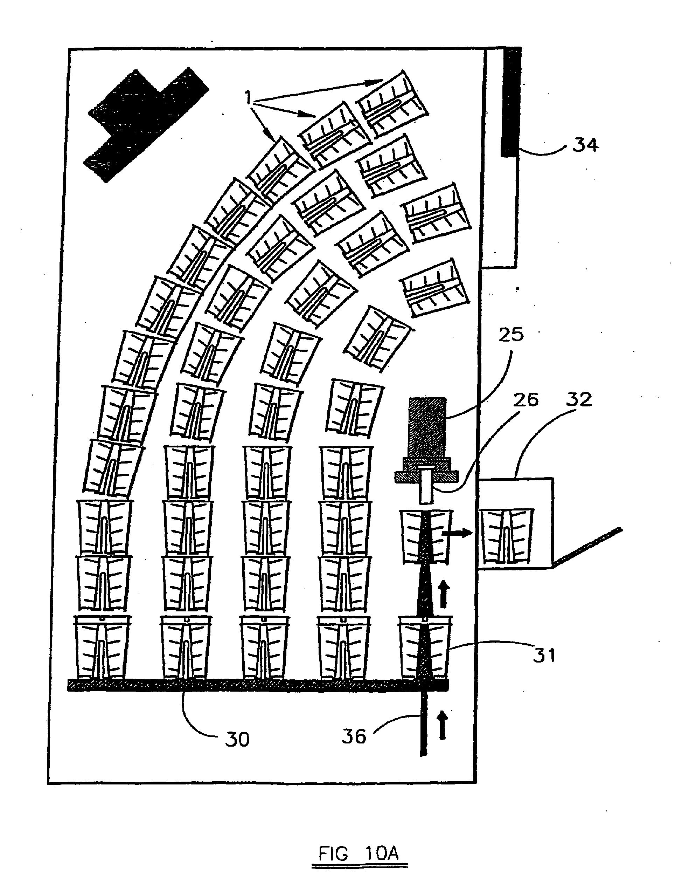

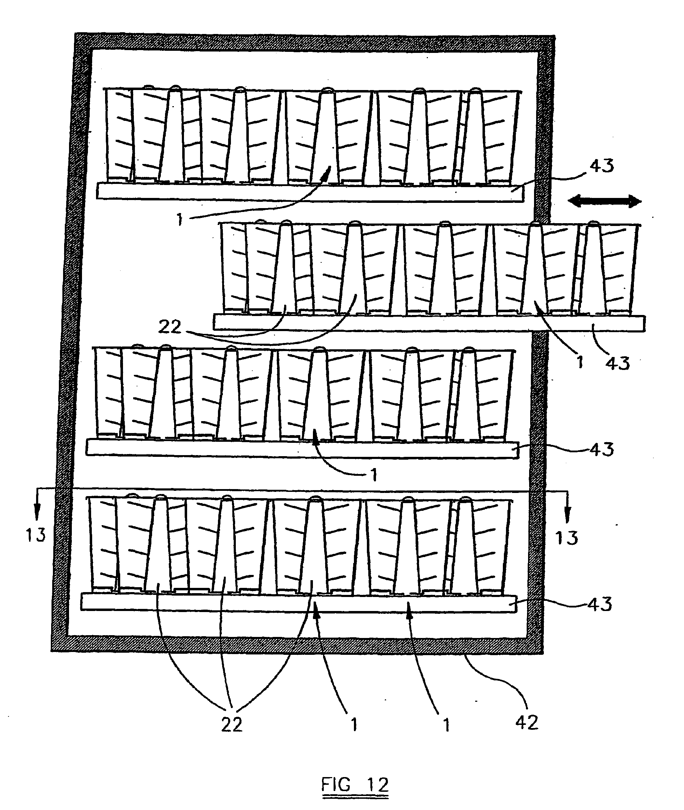

Referring now to Fig 10 there is shown in side elevation an arrangement incorporating the carousel arrangement of Fig 12. In this drawing can be seen the carousel 30 on which the filled containers are supported. When the containers at 31 are to be blended a mandrel 36 is inserted into the lower opening 3F of the container and raises the container towards a motor 25 and associated shaft 26 located above the container until the shaft is in driving engagement with the impeller 7. The motor 25 is operated to blend the contents of the container, the mandrel is withdrawn downwards and the container is then moved sideways after withdrawal of the mandrel 36 to a delivery point 32 from which the container can be accessed. Above each of the positions on the carousel 30 there is a vertical column of filled containers which can pass under gravity into the space on the carousel vacated by the blended container released by a mechanical release mechanism. There is provided an enclosure 37 in which the columns of containers and the blending mechanism are located and which may be refrigerated or heated to enable the containers to be maintained at the desired temperature level. In Fig 10A there is a similar arrangement to Fig 10 except that the columns of containers are inclined to enable the columns to be recharged through a front opening in the enclosure 37. A dual channel electronic controller may be used for temperature control in the enclosure 37 controlling operation of heating means and cooling means according to the sensed temperature.

The delivery point 32 can include a microwave unit at which the product may be heated. Blending of product can also take place at this point.

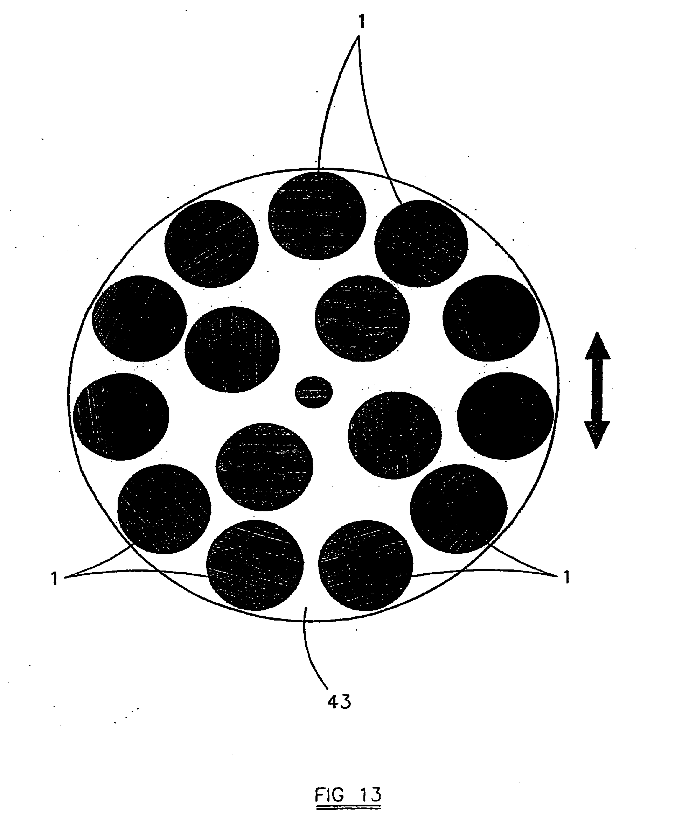

Referring now to Figs 12 and 13 there is shown a storage system for storing filled container assemblies. In Fig 13 is shown a storage unit consisting of an insulated housing 42 in which is located, one above the other, platforms 43 which are removably locatable in the housing.

Each platform 43 is generally circular and has an array of upwardly projecting location mandrels 22 which extend upwards into the container assemblies mounted thereon. The platform 43 and mandrels 22 are preferably of heat conducting material, such as aluminium, such that heat is conducted between the container contents and the interior of the housing. In this way the temperature of the contents of the containers is adjusted according to the temperature within the housing, and the contents of may be heated up (tempered) or cooled down to a predetermined temperature. Since the mandrels extend internally of the containers heat transfer takes place from without to within and from within to without the containers. Preferably the housing is kept at the desired tempering temperature or within a predetermined range of that temperature by heating/cooling means. A forced air circulation system may be used together with heating/cooling means to maintain the desired temperature of the product. The mandrels 22 may be omitted.
The circular platforms 43 may be used in the form of a carousel, as previously described, and removable, with the associated containers, from the housing. After dispensing of the contents of the container assemblies the platforms are recharged with filled assemblies for tempering or otherwise. The carousel can be manually or automatically rotated.

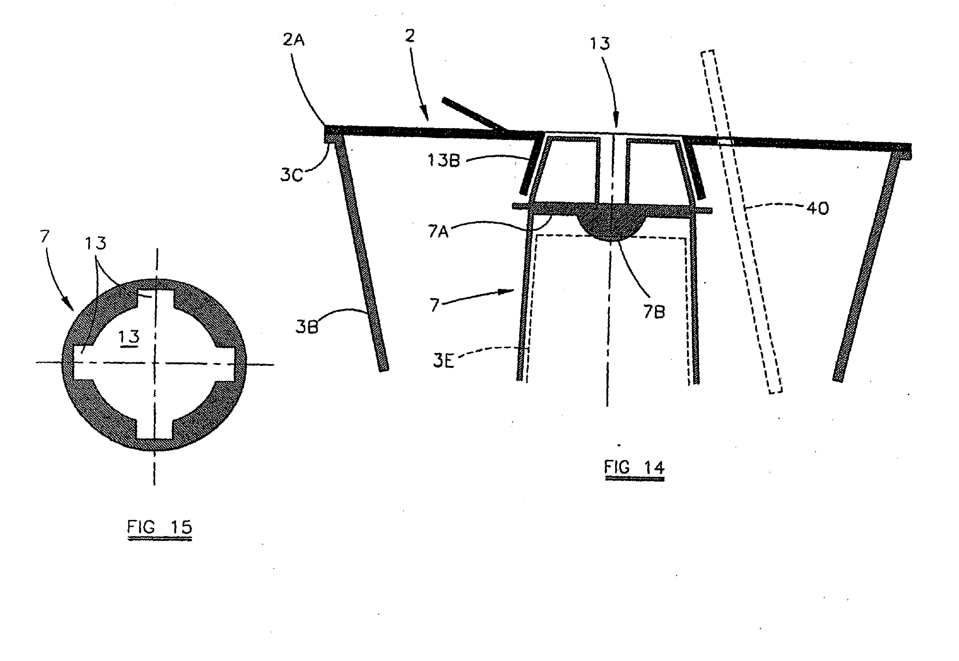

Referring now to Figs 14 and 15 there is shown an alternative construction for the upper end of the blending element 7 and for the closure 2.

The blending element 7 is formed with an opening 13 for receiving the drive shaft for the element which opening is shaped with drive dogs 13A. The outer sides of the drive dogs 13A are arranged within a downwardly and outwardly directed, circular portion 13B of the lid 2.

The drive dogs 13A extend upwards from the upper end of the element 7 which has a cap 7A closing said upper end. On the lower side of the cap 7A is formed a part-spherical member 7B which is directed downwards and which is arranged to engage the upper end of the member 3E which is formed with a complementary depression. The member 7B and the depression provide bearing surfaces during rotation of the element 7. In Fig 14 is shown a straw 40 extending through a frangible opening in the lid 2.

After blending and consumption of product within the container assembly it is intended that the assembly be discarded but the components of the assembly maybe constructed to be recyclable. The invention provides a container assembly which is readily manufactured from plastics mouldings, there being three main components and the components being readily assembled. Moreover before assembly the components are capable of being stored in a compact fashion by being nestable with one another. Due to the construction of the blending impeller an efficient blending action can be performed on the product even if the product is not of equal consistency throughout the container and even if it contains relatively viscous components. Accordingly the blending operation is efficient and quickly effected for a variety of products.

The blending impeller, although located internally of the container, takes up relatively little space and does not materially affect the capacity of the container which can, if necessary, be of slightly enlarged diameter and/or depth to accommodate the loss of capacity.

By the provision of the longitudinal opening 3F of the container any tempering of the filled containers to a blending temperature is more quickly effected. Tempering of the frozen containers is also readily achieved in a storage system as seen in Figs 10 & 11 by circulation of tempering air throughout the housing 37.

The assembly requires no special sub assembly of components prior to shipping the components from the supplier or at the location where the containers are filled. The seal 5A for the lid 2 may be attached to the lid prior to or after distribution to filling site. In addition the container may be filled with product by pre existing filling machines.

The apparatus may be adapted to enable additional ingredients to be added to the container prior to, during or after the blending operation. Such ingredients may include flavouring aeration means, carbonation means, heating medium such as steam and/or solids such as ice, nuts, chocolate etc.... The container closure may be formed with means for permitting such ingredients to be added such as openings for the entry of tubes. The closure may be recessed at its edge for such a purpose.

In making the additions to the container the container should be accurately located during the introduction of such additions to ensure that the tube or other means for making the additions can access the container at a defined position.

The apparatus may also find application for heated product and at the blending/dispensing stage the product may be heated, for example by microwave heating means .

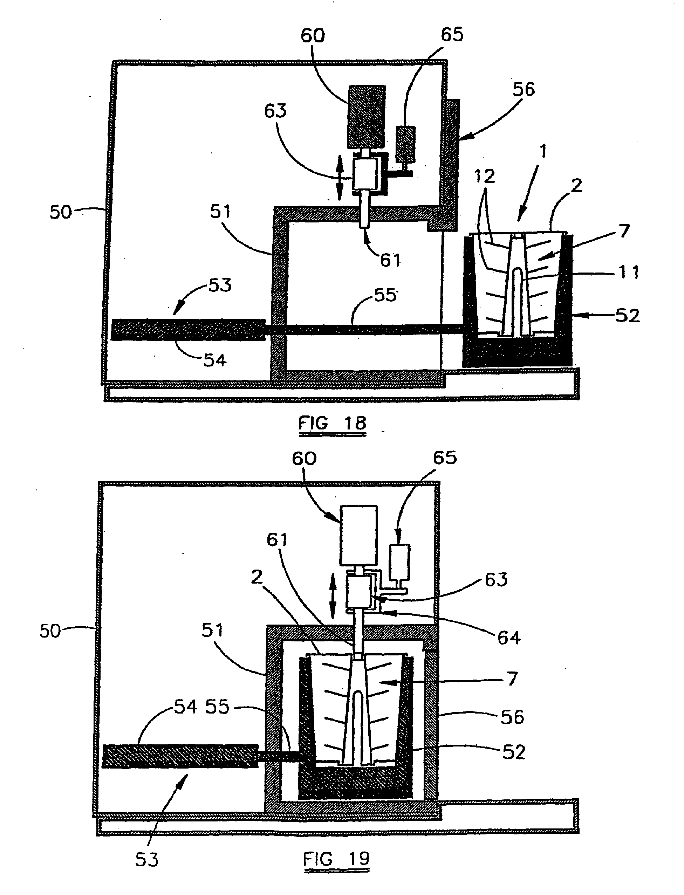

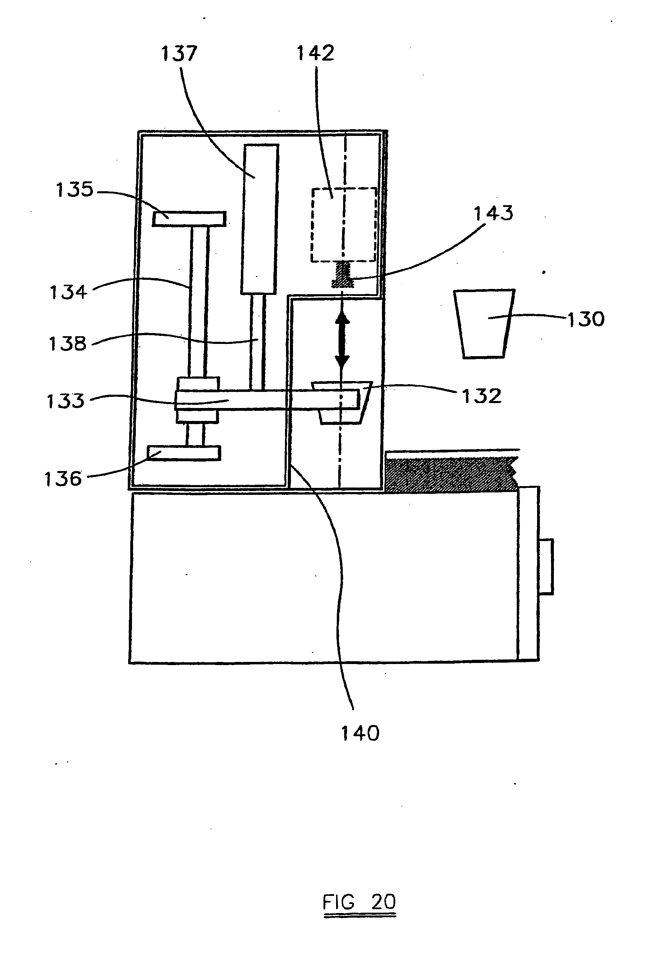

Referring now particularly to Figs 18 and 19 in which the same reference numbers are used for similar parts to those in the previously described embodiment, there is shown apparatus by which the food product within the container 1 is heated and blended prior to consumption. It will be appreciated that the container body 3 is charged with food product with the lid or closure 2 not present, and with the blending element 7 in position in the container so that the food product substantially fills or partially fills the container body. The lid 2 is then located on the container 3 to seal product within the container.

For the purposes of the present invention the filled container is then frozen to a storage temperature at which the food product will be preserved for substantial periods. Such temperature may be of the order of -20°C and is a temperature at which the food product cannot be readily blended. In order to bring the food product to a blending temperature prior to a blending operation the food product may be tempered in a tempering cabinet. to a blending temperature which may be of the order of -4°. In the present case however the apparatus of Figs 18 and 19 is intended to enable the food product to reach a blending temperature quickly and without the use of a tempering cabinet.

The heating and blending apparatus of Figs 18 and 19 includes a main housing 50 defining within it a compartment 51 in which the heating and blending operation takes place. A holder 52 is provided in which the container 1 is locatable, the holder 52 defining an interior space and the container seats in the space with its side walls in contact with the walls of the holder. If required the holder 52 includes a central upwardly directed portion shaped to locate into the hollow location member 3E to secure the container.

The holder 52 is movable in a horizontal direction between the position shown in Fig 18, from which the container can be loaded into and out of the holder 52, and an operating position shown in Fig 19 in which the holder 52 and container 1 are within the compartment 51. Movement between these positions is achieved by drive means 53 which conveniently includes a piston and cylinder arrangement of which a cylinder 54 is fixed within the housing 50 and a piston rod 55 extends out of the piston 54 for movement relative to the cylinder. Alternatively a linear drive may be used.

The compartment 51 defines a region in which microwave radiation can be directed to the food product within the container 1 whereby to heat the food product from the low, frozen temperature to a higher, blending temperature. The microwave radiation is arranged to heat up the food product by known means but using focused radiation whereby it is the volume occupied by the food product which receives the radiation in a directed way. The holder 52 is preferably provided with temperature detection means (not shown) whereby when the container is placed in the holder 52 the temperature of the food product is detected. This may be by temperature detecting means located outside of the compartment 51 or by temperature detection means within the compartment, for example infra-red temperature detection means. The temperature detected may vary and hence the duration of heating may need to be varied according to the temperature of product in the container compared with the temperature to which the product is to be brought for a blending operation. The duration of heating is calculated so that the heating means operates for the predetermined time which may be ofthe order of 10-30 seconds, depending also on the power of the microwave heating means and the size ofthe container. Usually the blending temperature ofthe food product will be of the order of -3°C to -4 °C compared with an initial temperature of about -20°C.

It will be appreciated that the compartment 51, when closed, provides shield means for the microwave radiation and there is provided a door 56 which is lowered into position to close the compartment 51 when the holder 52 is located within the compartment.

Upon completion of the heating of the food within the container the product within the container may be blended. Blending is by operation of a drive motor 60 located above the compartment 51 and having a drive shaft 61 extending downwardly towards the compartment 51. To couple the drive shaft 61 to the blending element 7, the shaft 61 is moved downwardly into engagement into the opening 13 so as to be in driving engagement with the element 7. Movement of the shaft 61 relative to the motor 60 is achieved by providing a splined connection 63, the connection moving up and down on an output spline of the blender motor shaft by means of a U-shaped arm 64 activated up and down by a linear drive 65.

After engagement of the shaft 61 with the blending element 7 and completion of a blending operation the shaft 61 is withdrawn upwards to resume its initial position. The door 56 is moved to an open position and the container with its associated holder 52 is ejected from the compartment 51 to the position shown in Fig 2. The container with its blended food product can now be lifted out of the holder 52 and is ready for consumption.

It will be appreciated that the components of the container and holder which enter the compartment 51 need to be manufactured from material which do not affect the microwave environment.

Usually the tab 5A will be removed from the container before it is introduced into the heating and blending position but, to avoid the need for removal of such tab, the closure for the opening may be arranged so that the drive shaft can break through the seal to enter the opening 13.

The holder 52 can be used to assist in directing the microwave energy inside the holder and the microwave transmission can be either from within the holder, outside the holder or from both inside and outside the holder 52.

The housing 50 can accommodate more than one compartment 51, for example 2-4 compartments. Alternatively a common compartment for multiple containers can be employed.

Flavour additives and aeration of the food product may be achieved by having means such as inlet tubes (not shown) to introduce such components into the container associated with the up and down movement of the shaft 61.

In Figs 20-21 there is shown further apparatus for heating and blending frozen milkshake product. The blending arrangement used may be in accordance with the previously described embodiments having a container 130 into which the product is charged for storage and for transportation to the point of consumption. The product may be frozen in the container for storage. The container has a blending element 7, as previously described, for driving engagement with drive means and to effect a blending action on the product but, before blending of the frozen product can be effected, the product needs to be heated to raise its temperature from the storage temperature to a blending and consumption temperature.

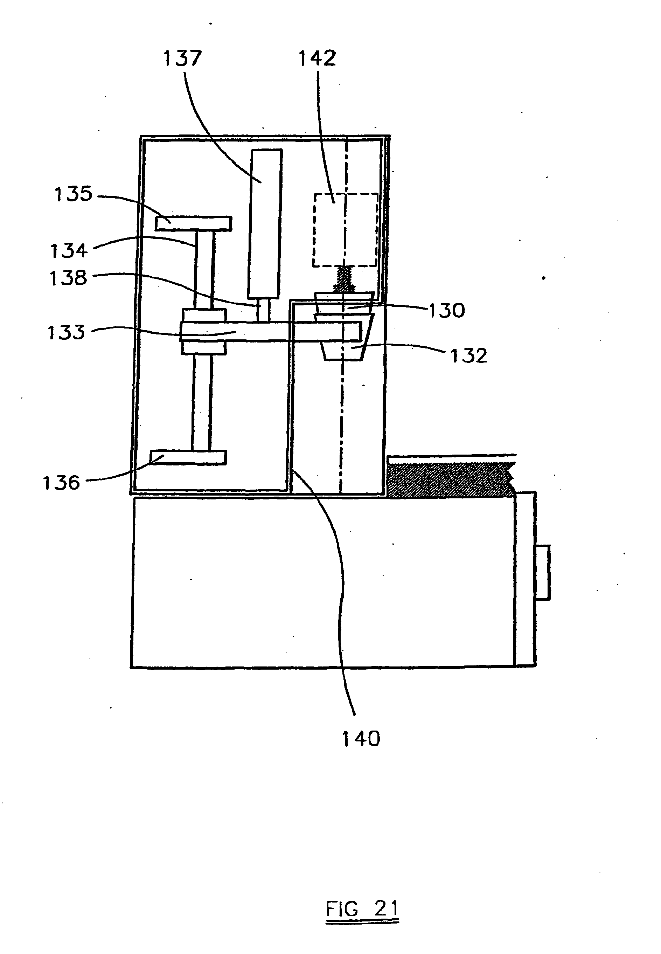

The illustrated apparatus of Figs 20,21 is intended to enable the heating and blending actions to be performed successively and for heating of frozen product in a container 130 to be performed on another part of the apparatus.

For the heating and blending actions there is provided a holder 132 which is mounted on an arm 133 which in turn is moveable vertically along a guide rod 134 supported at its ends on supports 135 and 136. The arm 133 is moveable in the vertical direction by a drive 137 having a drive rod 138.

The container 130 filled with frozen product is located in a compartment 139 of the apparatus to be subjected to microwave radiation in said compartment in order to heat up the product to a blending temperature. The microwave radiation is focussed on product within the container 130 to conserve power, and the duration of the heating is such as to heat up the product from the low temperature to the desired blending temperature.

After heating the container 130 is placed in the holder 132 and is lifted up towards a drive motor 142 having a drive shaft 43. When the container 130 has reached its upper most position the drive shaft 143 engages with a blending element (not shown) in the container 130 to effect the blending operation. Thereafter, the holder 132 is lowered again to its initial position for removal of the container with blended product from the holder 132. If required the arm 132 may be longitudinally extendable and retractable to present the holder 132 in a forward position, clear of the compartment 140, in which easier access to the holder 132 may be obtained.

The holder 132 may be pivoted about a horizontal axis to improve access to containers in the holder.

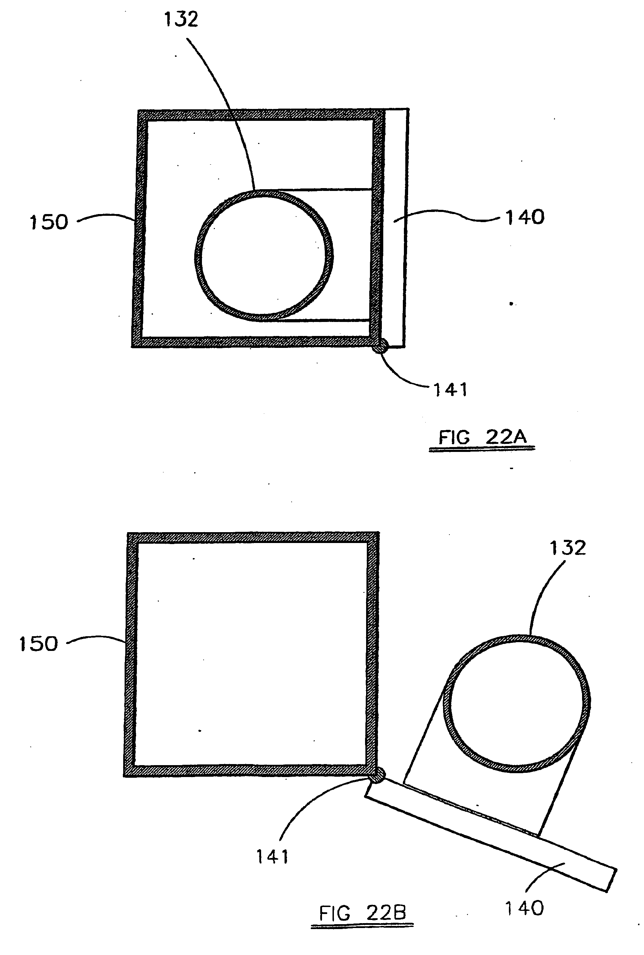

Referring now to Figs 22A and 22B there is shown another means for locating containers with products to be heated in a heating compartment 150. In this case the holder 132 is mounted on one side of a door 140 pivoted about a vertical pivot 141. The container of product is located in the holder 132 when the door 140 is in the open position (Fig 22B), the door 140 is pivoted to the closed position (Fig 22A) in which the holder 132 and accompanying container are located within the compartment 150 to be subjected to microwave heating. When the heating is completed the door is opened to gain access to the container.

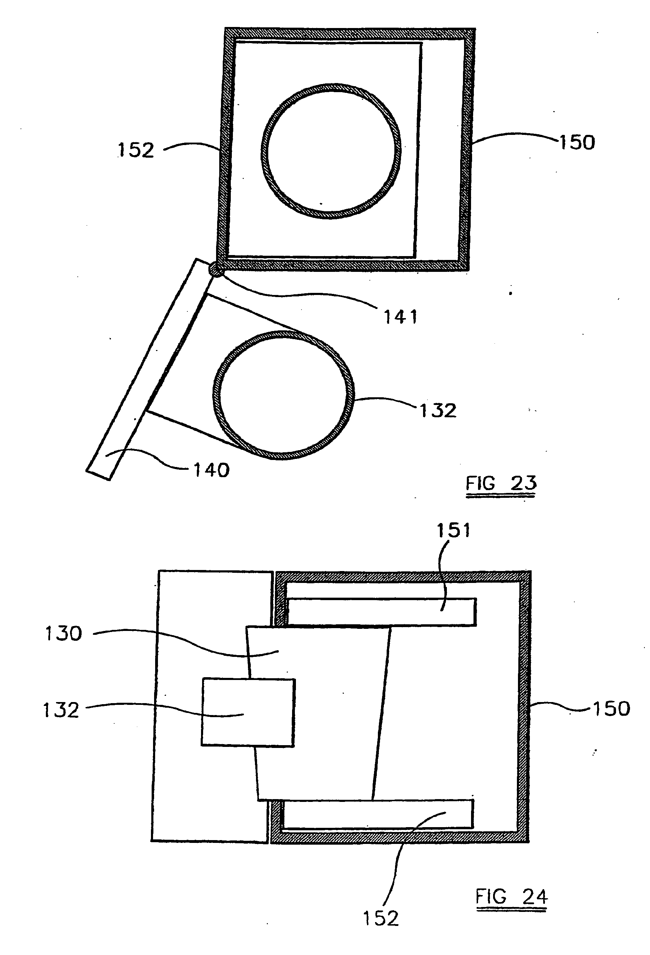

Referring now to Figs 23 and 24 there is shown another form of heating unit again including a door 140 pivotable about a pivot or hinge 141 to access a heating compartment 150. within the heating compartment 150 are upper and lowerplates 151 and 152 between which the container and holder 132 are located when in position in the compartment 150. The two plates 151 and 152 house microwave guides through which microwave radiation is delivered to the container and form an enclosed cylinder to give total control of the microwave energy.

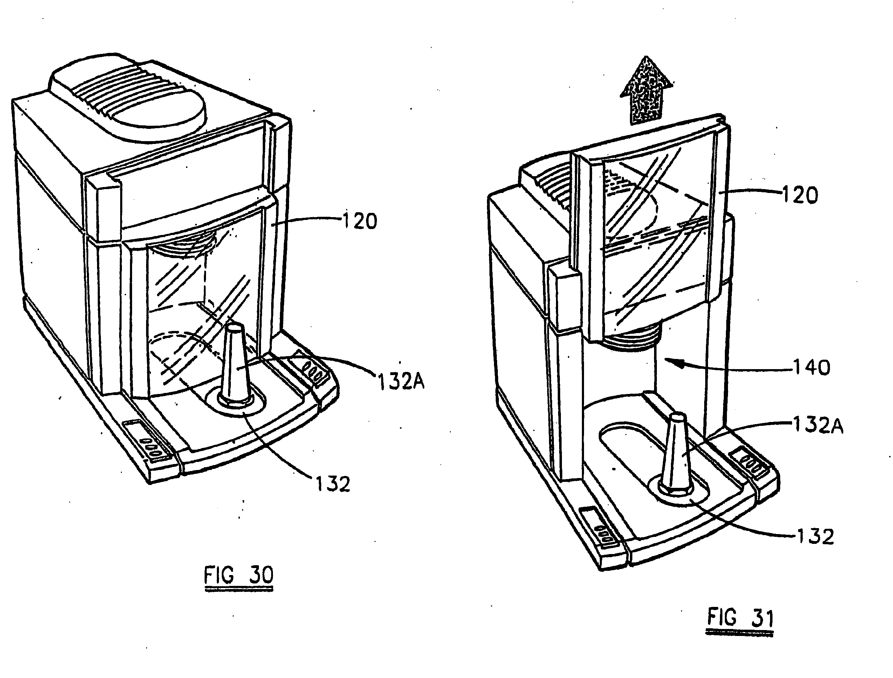

As another alternative, shown in Fig 30, a cylinder 155 with a vertical axis can be formed by one half 155A of the cylinder being inside the compartment 150 in a fixed position with another half 55B mounted on the door 140 so that when the door is closed the two halves match up to form a cylinder enclosing the container.

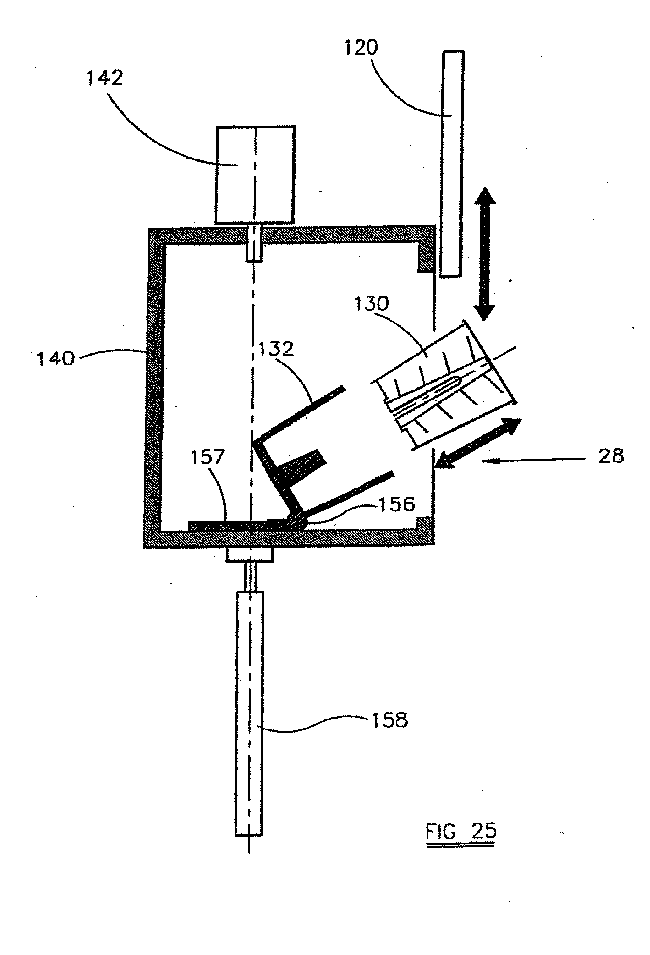

Referring now to Figs 25,26,27 there is shown another arrangement by which a heating and blending operation may be performed, these drawings using the same reference numbers for similar parts to the preceding embodiments.

A heating compartment 140 is accessed to introduce a container 130 into a holder 132 through an opening in the compartment having a door 120 moveable vertically to open and close the opening. The holder 132 is pivotally mounted about a horizontal axis 156 to tilt and present the holder 132 for location of the container 130 in the holder (Fig 25). Movement of the holder after location is towards a vertical position about axis 156. The container is vertically located during a heating and a blending operation.

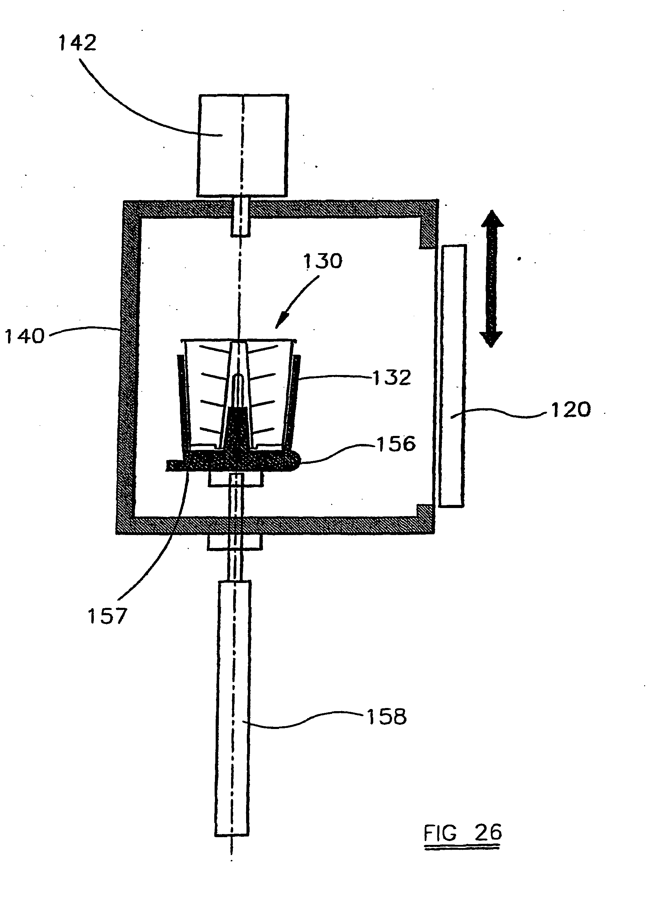

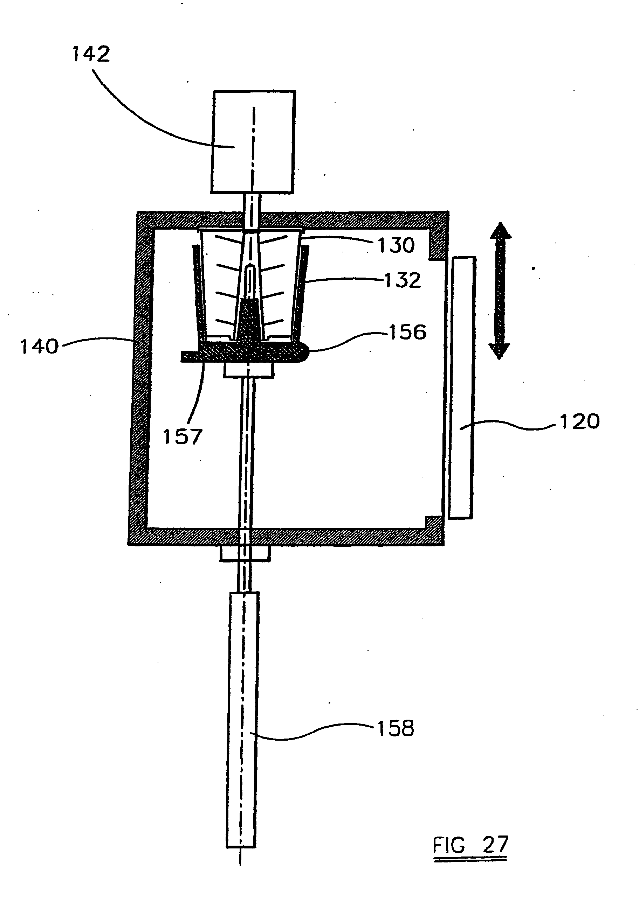

The holder 132 is mounted on a base portion 157 and is moveable up and down from its location position, Fig 25, through a heating position Fig 26, to a blending position Fig 27. In the blending position the container 130, having a blending element31, is engageable by a drive motor 142 having a drive shaft 142A which is driveably engaged with the blending element to blend the product within the container 130. Return ofthe container to the position of Fig 25, after blending, allows the container and blended product to be removed from the holder. Raising and lowering of the container towards the blending position is achieved by a vertically reciprocating movement using drive means 158 on the upper end of which the holder 132 is mounted. The location of the container 130 in and out of the holder 132 may be made automatically operated for use in, for example, self service applications. For this purpose the seating may be movable in the horizontal direction to present the holder outside the compartment 140 to receive a container. After heating and blending the container is either returned to the initial position or out of the compartment to the opposite side through a further opening. In the container discharge position the container may be automatically ejected from the holder.

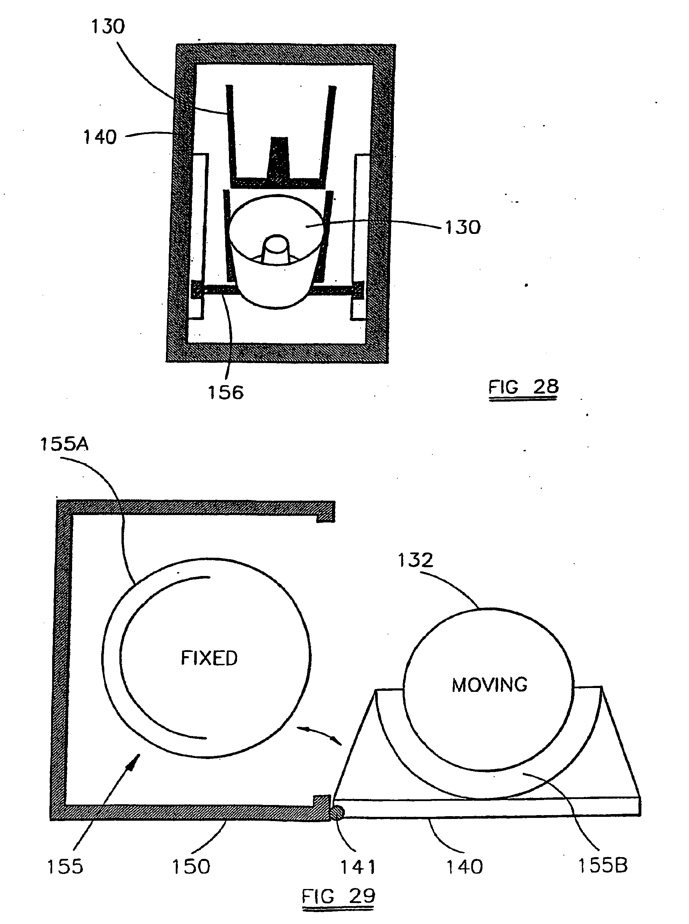

In Fig 29 is shown an arrangement similar to that of Figs 25-27 in which the holder 132 is movable horizontally to present the holder for location and removal of the container 130 manually or automatically. The holder is mounted on a reciprocal arm 132A for horizontal movement between a position external to the compartment 140, as shown in Fig 29, and an internal position within the compartment.

In another arrangement (not shown) the compartment in which microwave heating takes place may be moveable to present the container for a blending/extrusion step.

The source of microwave radiation is located in a suitable position in the apparatus.

Referring now to Figs 30-34 there is shown a combined heating and blending apparatus for a similar purpose to the apparatus described with reference to Figures 25-27 and in which the same reference numerals are used in respect of similar parts. There is shown in these figures a sequence of steps in manually loading a container 130 into the apparatus, heating the product within the container 130, and blending the product using the apparatus of the invention.

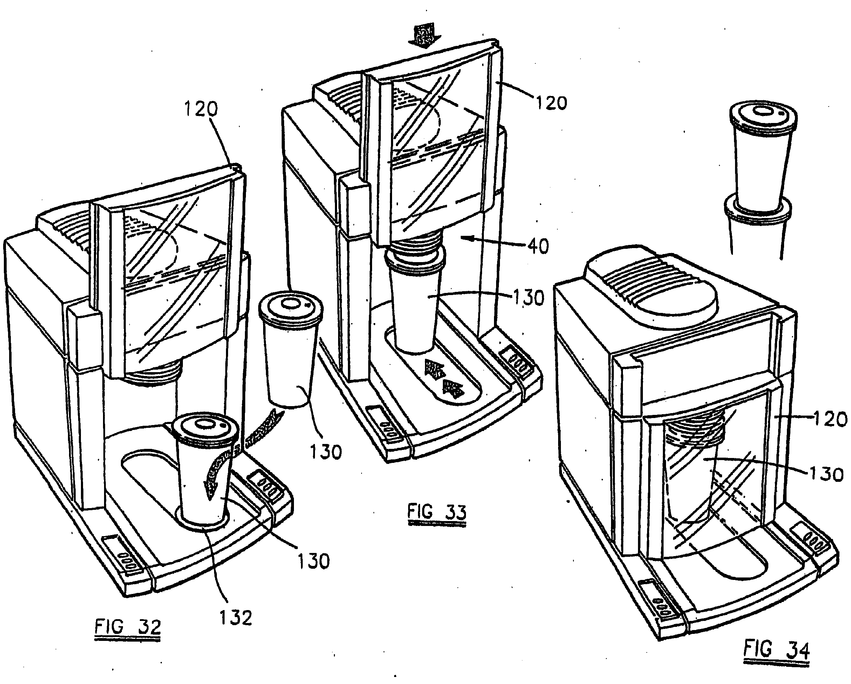

Fig 30 shows the apparatus ready for use, with the door 120 in the closed position and the container holder 132 located outside the compartment 140. In Fig 31 the door 120 is moved to the open position, as shown.

In Fig 32 the container 130 is located on the holder 32 which has an upwardly-projecting member 132A which locates in a corresponding opening in the base of the container 130. Thus the container 130 seats on the member 132 and 132A. The holder 132 is slidably movable, as seen in Fig 33 to move the container 130 into the compartment 140 in a horizontal direction. Upon reaching the position shown in Fig 33 the door120 is closed to the position shown in Fig 34 and the contents of the container are subjected to heating within the microwave environment of the compartment 140. After heating to the desired temperature the contents of the container 130 are blended by engagement of drive means within the apparatus with the blending element within the container 130.

After heating and blending the door 120 is opened, the holder 132 is moved outwardly to its initial position and the container is removed with the product within the container ready for consumption.

It will be appreciated that by providing heating means used immediately prior to dispensing of the food product it is no longer necessary to heat up or temper product within a tempering cabinet. This overcomes problems with tempering cabinets, including problems with stock rotation which should operate on a "last in, first out" principle but is difficult to achieve. The need for tempering cabinets is avoided. Moreover the use of tempering cabinets usually involves opening and closing access doors which allows heat into the cabinet. In addition tempering cabinets can usually only be satisfactory if the product dispensing temperature for all products within the cabinet is the same in each case. Without tempering or heating up a frozen product extrusion or blending of standard product formulations is difficult to achieve.

A further problem with tempering cabinets is that ice can build up within the cabinet, requiring ice removal.

Although these problems can be overcome it may sometimes require a special formulation of product to achieve this. The use of heating apparatus prior to dispensing with the possibility of individual control of the heating operation for each container permits standard existing formulation of product to be employed and tempering cabinets to be avoided altogether.

The product container can readily be applied with information to determine the amount of heating required, according to the container contents, in each case. For each product a different heating operation can be performed and there is also provision for detecting the temperature of the product before entry into the heating environment.

By the use of microwave heating for the specific product container the microwave radiation can be directed specifically at the space occupied by the product and is very confined resulting in efficient use of microwave energy.

The holder my be sanitised after each blending or extrusion step by microwave radiation assisted by a water spray on the holder which is thus subjected to microwave heating to sterilise.

Bar coding may be used on the product containers to monitor product and other characteristics which may be useful to the operator such as price, 'sell by' date and stock control information.

Instead of the heating time for the product being calculated automatically the operative can operate the timer according to the product within the container and the temperature of the product by providing controls, such as push buttons or touch pads, representing target temperatures for the product to be heated. Controls may be provided according to the input temperatures and for the output temperatures. The need for an input temperature scanner can then be avoided. In another arrangement the time taken for heating can be varied by adjusting the power input for the microwave heating unit.

In another arrangement the heating effect achieved can be tested at the commencement of blending. This can be by measuring the power (through the current taken by the blending motor) at the commencement of blending. If this exceeds a predetermined amount it will indicated that the product is insufficiently heated and further heating is required. After further microwave heating blending can again be attempted. This cycle can be repeated until adequate heating has taken place. Circuitry to memorise the heating duration is then activated so that the next container is subjected to the same amount ofheating as the previous container. As a further feature and to enable preset heating for different products requiring different heating times, there may be provided different actuators selected by the operator or automatically by sensor for different products requiring different predetermined heating durations.

The apparatus may include the facility for two or more heating compartments so that as one container is introduced for heating the other is discharged for dispensing. In this arrangement a common microwave radiation generating unit can be provided which directs microwave energy at one or other of the compartments.

Each container may be colour coded by label or otherwise, each colour representing the required product temperature. A colour code reader may be provided to detect the colour and to determine the required product temperature and, hence, the heating duration for that product.

The heating means may be located within or closely adjacent a freezer in which the container is stored at said low temperature and there may be provided means for automatically transferring the container from storage to the heating means.

Heating of product may be directed to heat the centre of the product to a higher temperature than the rest of the product. Sauce and toppings may be injected into the centre of the product at the filling machine for filling product into the container. Thus on extrusion of product from the container the centre of the product is warmer and may be liquid. Similarly toppings on the top of the product may be heated to a higher temperature than the rest of the product.

The apparatus described can be provided with functions which enable the apparatus to be operated simply as a self-vending operation or otherwise. A display can be provided on the front part of the equipment in the form of a small visual display unit which may be a liquid crystal display. The display on the unit may be sourced from a micro- processor which may be in the form of a RAM chip, by using a CD ROM or a DVD disk. By this means it is possible to change the display.

The display can provide messages to the user relating to the operation of the machine to indicate to the user the various steps which need to be taken to effect operation, coupling the display with detectors on the machine which detect at which stage the dispensing operation has reached. In addition the display may include sales aids such as a welcome sign and marketing and selling information.

Associated with the display may be controls by which information such as nutritional data, price, recreational information, flavour choice, the weather forecast may be retrieved from the system. This may be accompanied by audio information including music which may only be operated when a user approaches the apparatus.

The system may be initiated by the user beginning operation of the apparatus and a user will be provided with instructions for loading and operating the apparatus. If the apparatus includes scanning means for scanning the container chosen by the user it will be able to tailor the information supplied to the product chosen. Furthermore the user may be supplied with information concerning the stage in the operation ofthe apparatus reached including the time elapsed and the time which will elapse before the product is ready for consumption. The user may initiate operation of the system by inserting a coin or a card. If the use of a card with magnetic strip is employed this could include a special audio message customised to the product. Advertising may be contained on the card to be displayed. Upon completing a dispensing operation of the apparatus the display may switch to advertising messages, advertisements, moving pictures or other material.

In the event that the apparatus is not operated properly or completely, such as when an empty container has not been removed, that customer or the next customer who attempts to operate the apparatus is given the signal on the display requesting removal of the container. If the product is not correctly dispensed a signal to this effect may be transmitted to the user and, in addition, to the attendant. Moreover the system may detect when certain product flavours are out of stock and this information may also be transmitted to the attendant. The processor may be connected to a central processor which is capable of transmitting information, upon request, such as information concerning stocks of product.

As another possible facility there may be mounted on the apparatus a camera to observe customers. If the apparatus is not adapted to self-service use the information displayed can be mounted differently to be seen by the customer during operation.

The display may be connected to the internet so that additional information may be down loaded and displayed.

It may be helpful to have a control whereby the apparatus detects when a service call is required and sends a request to the nearest service technician. Audio facilities can be provided from a voice chip so that additional functions can be provided to those previously described.

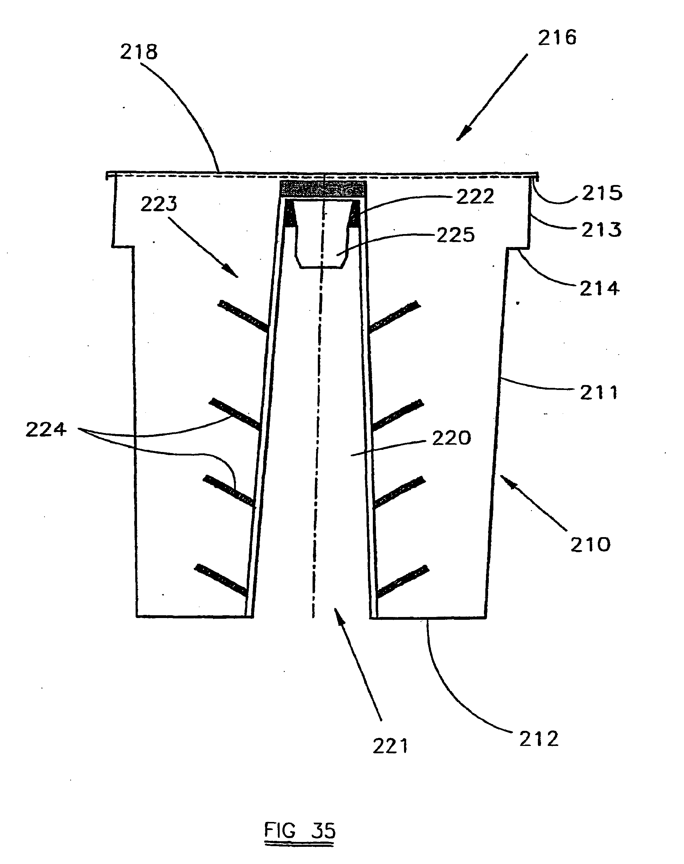

Referring to Figs 35, 36 and 37 there is shown another container and apparatus for blending product within the container in preparation for product to be consumed from the container.

The container 210 is of generally circular section over a body portion 211 tapering from a lower end or base 212 outwards towards the upper end. Towards the upper end the body portion 211 is stepped outwardly at 213 to provide a shoulder 214. The shoulder 214 provides for stacking the containers 211 inside one another prior to assembly and for transportation purposes.

At the upper end the body 211 is open having an outwardly directed lip 215 arranged to cooperate with a lid 216, when assembled. The open end of the container 210 may be fitted with a heat sealed film 218 after assembly and filling with product, over film which the lid is fitted.

Upstanding from the base 212 along the central axis of the container 210 is formed a hollow upstanding location portion 220 which tapers inwardly towards its upper end and provides an opening 221 at its lower end. The portion 220 may be offset from the central axis. The upper end of the portion 220 is open and at the opening is formed a tapered seating 222.

A blending element 223 is arranged to sit over the upstanding portion 220 and comprises a sleeve whose inner surface is shaped to fit rotatably over the outer surface of the hollow portion 220. The blending element 223 carries at spaced positions along its length outwardly directed blending blades 224, in this case formed as two vertical rows at opposite sides of the element 223. The blades 224 are arranged so that upon rotation of the blending element 223 about its axis the blades engage with the product within the container to cause it to be blended. Other blending elements 223 than that shown may also be used or the blending element may be omitted in which case the portion 220 is closed at its upper end.

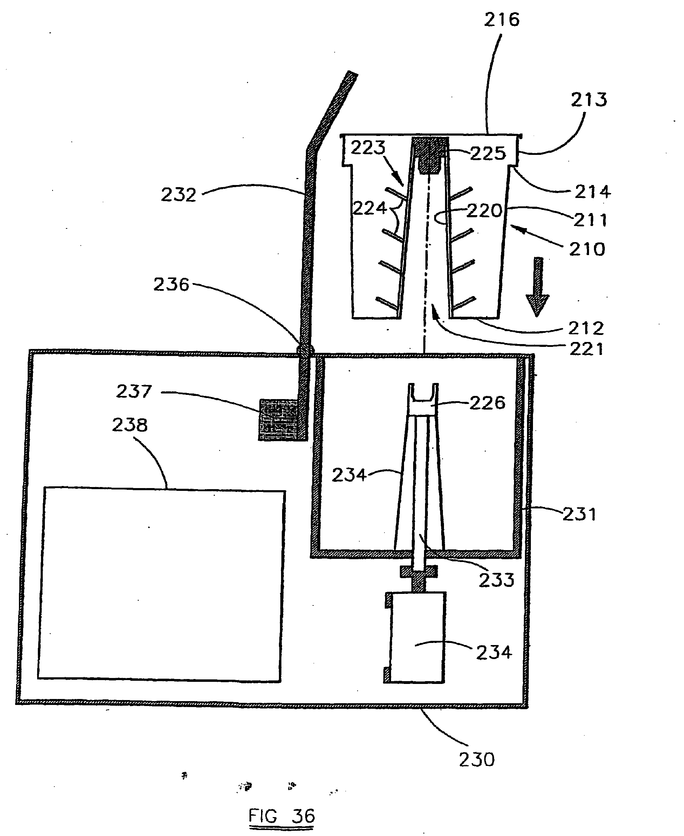

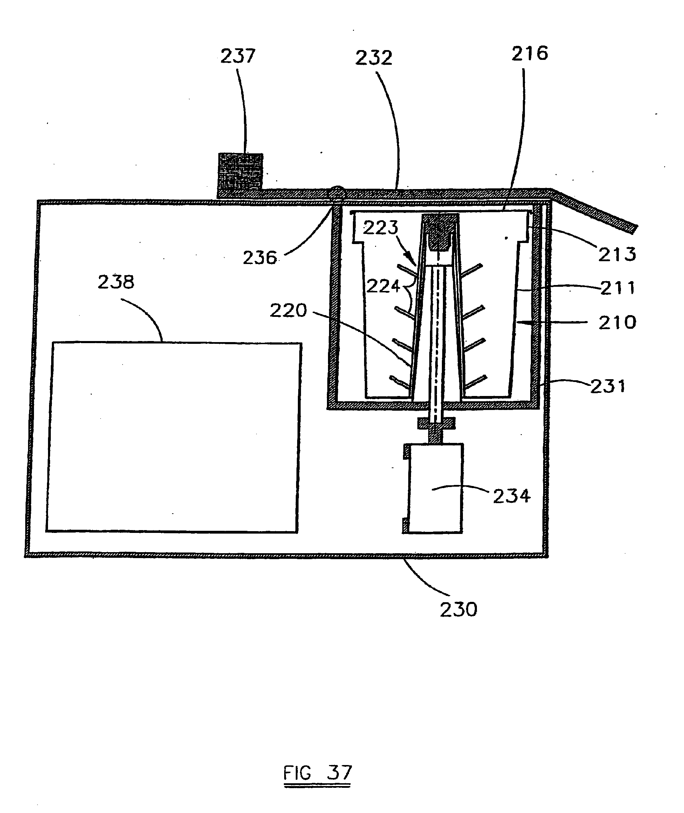

At the upper end of the blending element 223 there is formed a driven member 225 arranged to extend downwardly through the open end of the hollow portion 223 into the seating 222. At its lower end the driven member 225 is formed with means to engage a drive member 226 (Figs 36 and 37) to be described.

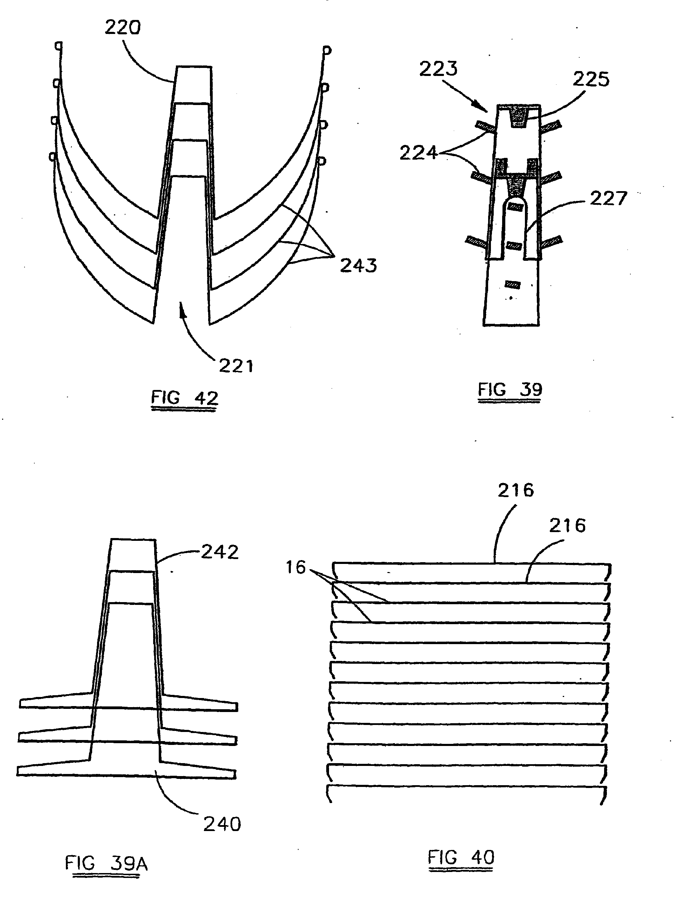

The components of the container 210 would normally all be ofplastics material made by any suitable moulding process, but other materials may be used such as paper based materials. As seen in Figs 40 and 41 the blending elements 223 are capable of being stacked one on top of the other by the provision of longitudinally extending slots 227 formed in opposite sides of the element to receive within the slots the blending blades 224. Similarly, as seen in Fig 41, the lids 216 are arranged for stacking one on top of the other. Although not shown it will also be evident that the containers 210 are stackable one inside the other with the upper ends of the hollow portions 220 engaging through the lower openings 221 of adjacent containers when so stacked. The rim portion 215 of each container engages below the shoulder 214 of a container located on another container. Such stackability ensures that the component parts are able to be transported with minimum volume after manufacture and during transportation to an assembly location.

The containers 210 are taken to an assembly and filling location where product is introduced into the container through the upper end to the predetermined desired level within the container. Before or after filling the blending element 223 is located over the hollow portion 220. After filling the film 218 is located over the upper opening to seal said upper opening and the lid 216 is applied over the upper lip 215 of the container. If desired a seal may also be applied to the lower base 212 of the container to seal the opening 221 and such seal may be heat sealed and in the form of a film similar to the film 218.

Filled and sealed containers may then be cooled or frozen to the desired storage temperature. In the present case the apparatus described for blending is assumed to be dealing with frozen product within the containers 210 which needs to be brought up to a blending and dispensing temperature but the container of Fig 35 may be used in alternative apparatus without a heating function, for example when the product is aseptically prepared in which case cooling for transport may not be required.

The filled and cooled/frozen containers of product may then be stored and transported to the point of blending and consumption. Such storage will be at the desired temperature in a refrigerated environment.

Referring now in particular to Figs 36 and 37 there is shown apparatus for blending the product within the container 210 ready for consumption. The apparatus comprises a housing 230 in which is located a compartment 231 which is a generally cylindrical compartment open at its upper end and having a releaseable closure member 232 for the upper opening. At its lower end a drive shaft 233 extends upwardly through the base of the compartment 231 from a drive motor 234. Upstanding from the base of the compartment 231 is a pedestal member 234 of tapering shape corresponding to the internal dimensions of the hollow portion 220 of the container. At the upper end of the shaft 233, which extends through the pedestal member 234, there is provided the rotatable drive member 226 arranged to engage the driven member 225 on the blending means 223. As shown in Fig 36 the container 210 is being loaded into the compartment 234 so that the blending means 223 is in driving engagement to be driven by the drive motor 234. The closure member 232 is in the open position having been pivoted to such position about a pivot 236. The closure member 232 carries a counter weight 237 to assist in the opening action which may be manually operated or power driven to automatically open and close.

The compartment 231 comprises a microwave compartment whereby microwave energy from a microwave power source 238 in the housing 230 supplies microwave power to the compartment 231 in its closed position (Fig 37) to warm up the product within the container 210. Thus after the container 210 has been loaded into the compartment 231 with the drive means 226 and driven means 225 in driving engagement the closure member 232 is moved to the closed position. After completion of the loading of the container into the compartment 231 and the closure of the closure member 232 microwave power is directed into the compartment from the source 238 to heat the product within the container to the desired temperature. The duration and power of the microwave energy is determined according to the initial temperature of product within the container, the amount of product within the container, the nature of product within the container and the desired final temperature of product within the container. Such duration and power of the microwave energy may be determined automatically upon reading data on the container and by reading the initial temperature of the container. Such data may also prevent operation of the apparatus should the container and its contents not meet the desired parameters, for example if the product has passed its sell by date, the container is not filled with product etc.

In heating the product within the container by microwave radiation the compartment may be tailored to the size of the container and the microwave energy may be imparted to the food product using the internal opening within the container, if necessary. In particular antenna means may be located within said opening and such means provides the or a source of microwave radiation.

After heating the product in the container the drive means 234 is operated to rotate the blending means 223 to blend the product which is then ready for consumption from the container or after being transferred to another container.

In the assembly of the blending element 223 with the container the driven member 225 may be located in the seating 223 as a force fit and a seal is moulded into the seating 222, preferably in the form of a liquid seal. Thus although the upper end of the other portion 220 may be above the level of product within the container it is preferred that there is a seal between the portion 220 and the element 223.

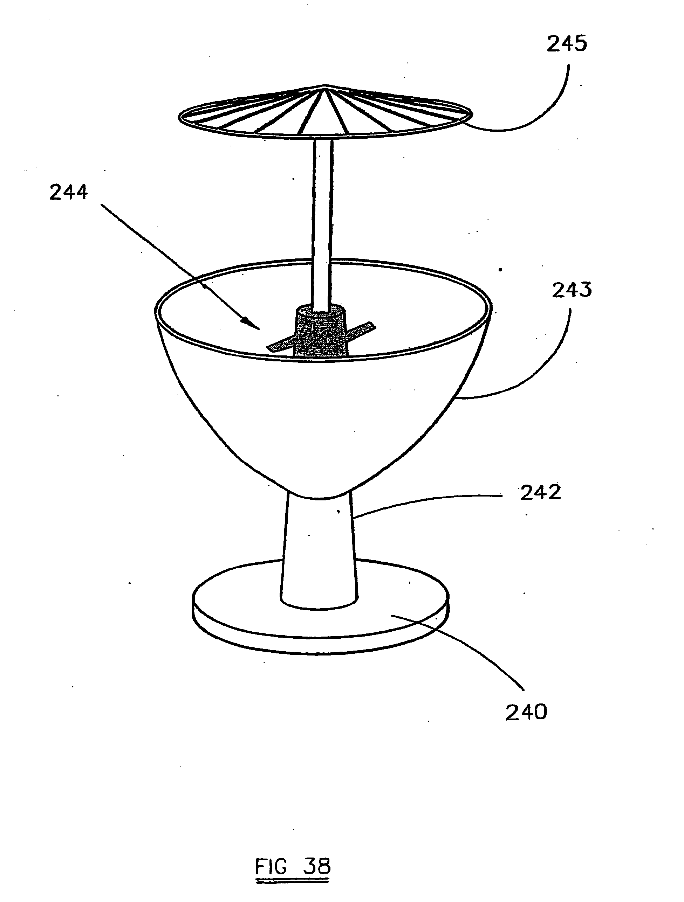

Referring now to Fig 38, there is shown an alternative form of container which is intended to simulate a cocktail glass. In this case the container includes a base portion (Fig 41) in the form of a disc 240 and upstanding from the base is a tapered hollow portion 242 extending upwards and arranged to be inserted into a body member 243 (Fig 42) in the shape of a goblet, i.e. of circular cross section and curved inwards towards is lower end. The upper end of the goblet 243 is open, and during blending the body 243 has located therein a blending element 244 located over the upper end of the hollow member 242 within the body 243. The blending element 244 and the drive to said element is similar to that described for the previous embodiment. Thus the product is filled into the body portion 243 and such product is blended by rotating the blending element 244 about its axis, as previously described. This container may have a lid 245 which may be raised and may simulate an umbrella in a manner of cocktail containers. The body member 243 is located onto the base portion 240 after blending for consumption of product and the base portion may be of reusable material, for example of glass. Alternatively the product is poured out of the body 243 into another container for consumption.

The containers described may be used independently of the microwaveable heating arrangement, especially if the food product is already at the desired blending temperature. In other respects the drive arrangement and pedestal support may be as described but it may no longer be necessary to have the closed compartment around the container.

It is intended that the container and the blending element be disposed of after blending and consumption of the product. Access to the product in the container after blending may be through the lid 216 and the seal 218 (if present) using a straw. Alternatively the lid 216 may be removed and access is through the seal 218. However, the lid 216 and seal 218 can both be removed for consumption of product or the product may be poured into another container, for example a reusable glass container.

Sauces and other additives can be made to the container prior to or during blending, if required. Such additions will usually be through the lid and seal.

The container may be in different sizes according to the product contained or individual customer requirements. To achieve different sizes the member 220, may remain the same size with the height and/or diameter of the container being changed. In some cases the base of the container may be clear of the base of the compartment with the container supported on the mandrel 234.

The inner surface of the member 221 may be polygonal shape with the mandrel 234 of corresponding section. The length of the drive dog 225 may be varied to maintain engagement with the drive 226 according to the size of the container.

The container 210 may be provided over its internal surface with circumferentially spaced, radially projecting ribs (not shown) which extend longitudinally of the container from the lower end towards the upper end. Such ribs assist in agitating the product in the container during blending to improve the blending action. The spacing and depth of the ribs may be selected according to the nature of the product, the form of blending means and the speed of rotation of such blending means.

The product may be frozen carbonated product or beverage in which carbon dioxide is introduced into the product at or after filling into the container and the product is then frozen to retain the gas within the product. Product flavours may be added to the product at the point of sale i.e. during blending and dispensing, as described., The product may alternatively be aerated at the blending stage.

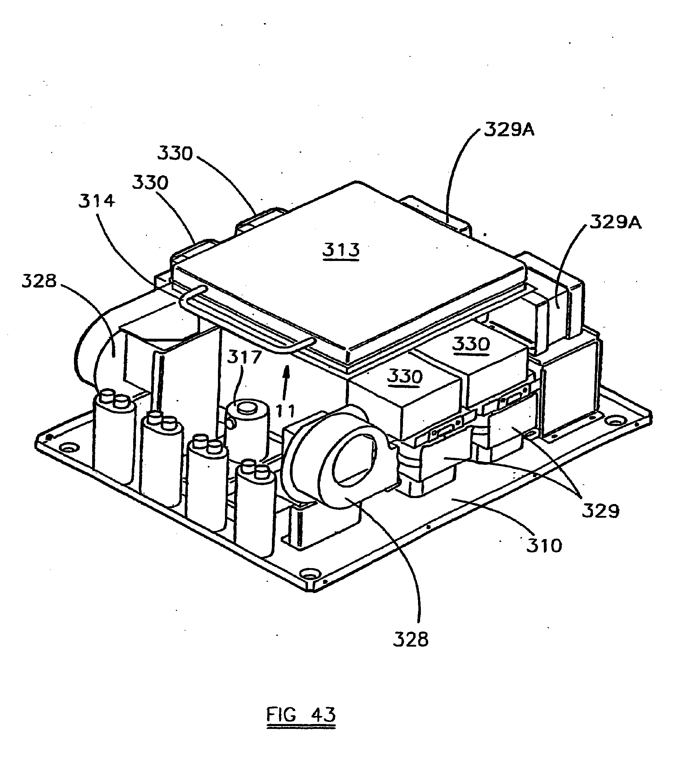

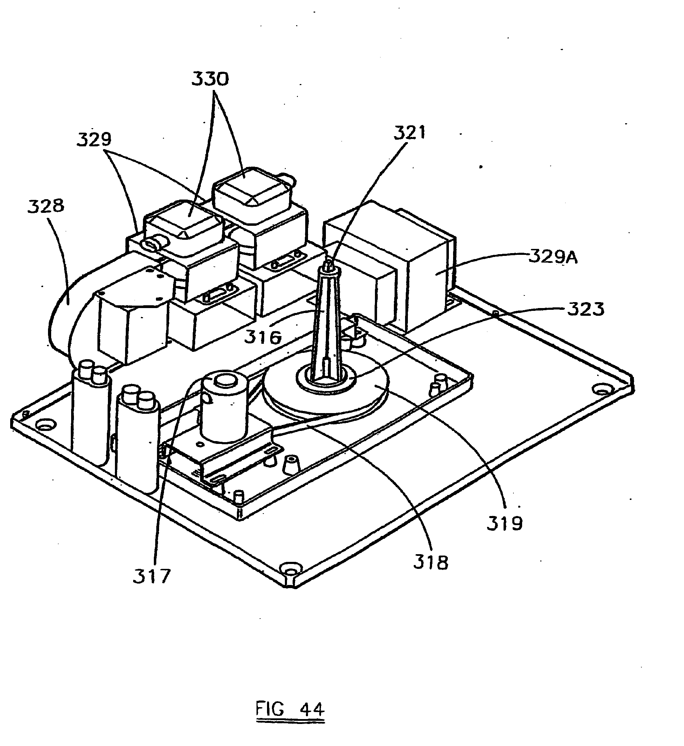

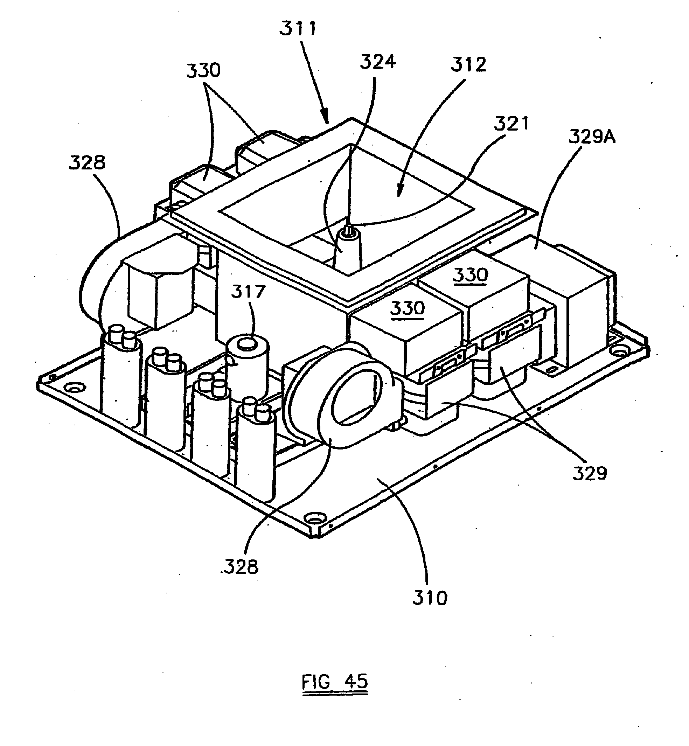

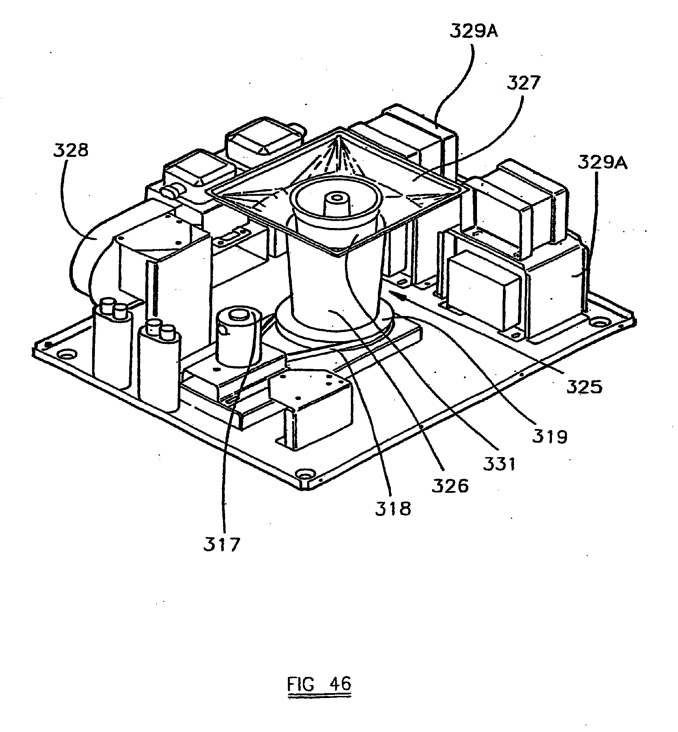

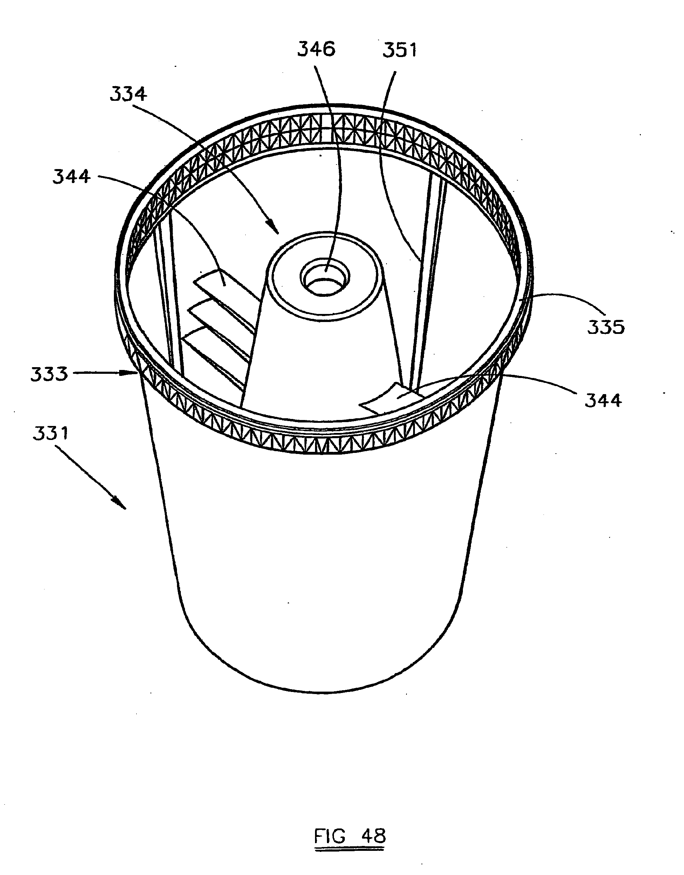

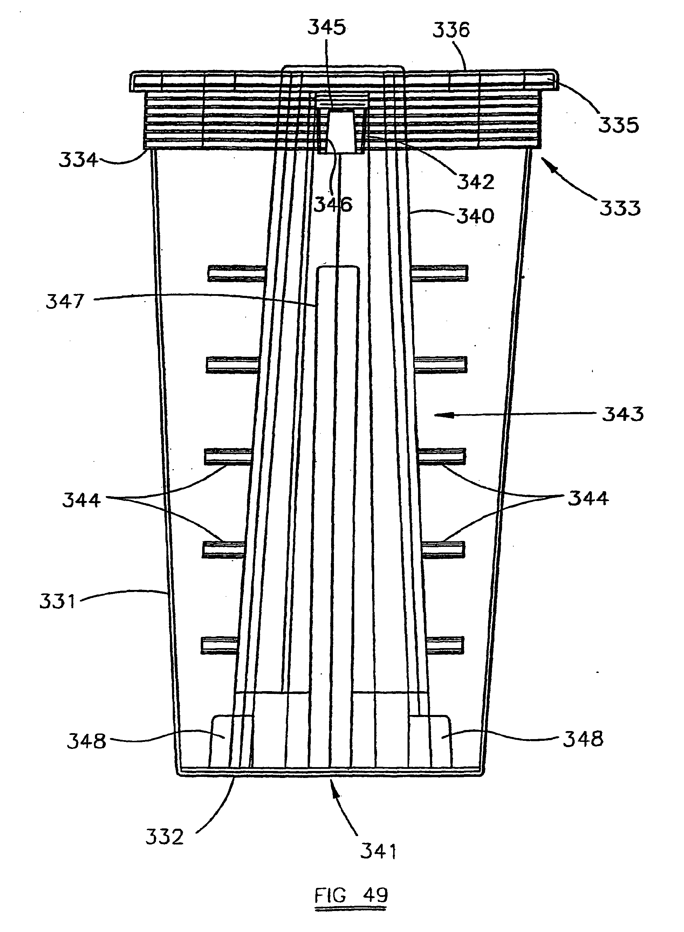

Referring to Figs 43-46 these show further apparatus in which the container of Figs 48-56, containing food product, is heated and blended. The apparatus comprises a base plate 310 on which is mounted the various components which include a rectangular housing 311 having an upper opening 312 over which is locatable a closure or lid 313. The lid is hinged about one edge and is lifted and lowered by a handle 314. In the open position of the closure 313 the housing 311 is accessible to insert and remove a container of food product. The housing 311 and the closure 313 are made from material which reflects microwave radiation whereby such radiation once entering the housing cannot escape, providing that the closure 313 is in place.

Within the housing and directed upwardly from the base thereofis a drive member 316 which is coupled for rotation about a vertical axis by a motor 317 which drives a belt 318 engageable with a pulley 319 on which the drive member 316 is mounted. Thus operation of the motor 317 causes the drive member 316 to rotate at a speed selected according to the blending operation to be conducted on food product within the container.

At the upper end of the drive member 316 is located a drive element 321 arranged to drivingly engage blending means 343 (to be described). Located around the base of the drive member 316 is a fixed member 323 which provides a support for a tapered support member 324 which supports the container body in a stationary position during blending.

Located within the housing 311 between the walls of the housing and the container is a locating member 325 which is generally of plastics construction and defines an inner cylindrical portion 326 and an upper diverging portion 327. Containers to be located in the housing are inserted within the cylindrical portion 326 which is spaced from the sides of the container. The member 325 is removable for cleaning and sanitisation and may be disposable.

Mounted on the base plate 310 are microwave radiation generating means in the form of magnetrons 329 of which two are located at one side of the housing 311 and two at the opposite side, each having associated wave guide means 330 therewith. The wave guide means 330 are arranged at levels and positions relative to the housing 311 such that microwave radiation is directed in different directions and levels within the housing so that the radiation ensures efficient use of the radiated energy directed towards product within the container. In the arrangement shown the support member 324 will act as a reflector of radiation so that after the radiation has penetrated through the food product it is reflected outwards in a different direction and even heating of the product takes place. The magnetrons are cooled by fans 328. Microwave energy may also be directed into the centre of the container through an antennae located within the hollow centre, and the antennae may be located in the support 324. The magnetrons 329 are supplied with power through transformers 329A.

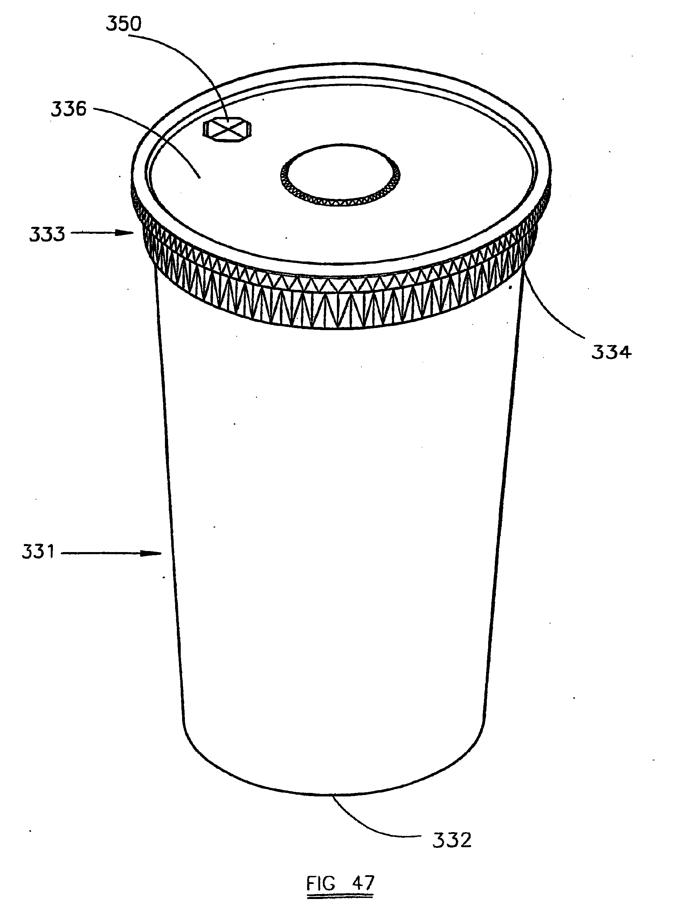

A container for use with the apparatus of Figs 43-46 is illustrated in Figs 47-49. The container is of generally circular section over a body portion 331 tapering from a lower end or base 312 outwards towards the upper end. Towards the upper end the body portion 331 is stepped outwardly at 333 to provide a shoulder 334. The shoulder 334 provides for stacking the containers inside one another prior to assembly and for transportation purposes.

In particular, the shoulder enables denesting at a filling station at which product is introduced into the container.

At the upper end the body 331 is open having an outwardly directed lip 335 arranged to cooperate with a lid 336, when assembled. The open end of the container may be fitted with a heat sealed film after assembly and filling with product, over which the lid 336 is fitted.

The lid 336 may be omitted or may be applied at the point of sale/dispensing.

Upstanding from the base 332 along the central axis of the container is formed a hollow upstanding portion 340 which tapers inwardly towards its upper end and provides an opening 341 at its lower end. The portion 340 may be offset from the central axis. The upper end of the portion 340 is open and the opening is formed with a tapered seating 342.

A blending element 343 is arranged to sit over the upstanding portion 340 and comprises a sleeve whose inner surface is shaped to fit rotatably over the outer surface of the hollow portion 340. The blending element 343 carries at spaced positions along its length outwardly directed blending blades 344, in this case formed as two vertical rows at opposite sides of the element 343. The blades 344 are arranged so that upon rotation of the blending element 343 about its axis the blades engage with the product within the container to cause it to be blended. Blending elements other than that shown may be used.

At the upper end of the blending element 343 there is formed a driven member 345 arranged to extend downwardly through the open end of the hollow portion 343 into the seating 342. At its lower end the driven member 345 is formed with an opening 346 in which is engaged the drive element 321. The upper end of the portion 340 and of the blending element 343 may be of lower height than shown and below the level of product in the container.

The components of the container are normally of plastics material made by any suitable moulding process, but other materials may be used, such as paper based materials. Blending elements 343 are capable of being stacked one on top of the other by the provision of longitudinally extending slots 347 formed in opposite sides ofthe elements to receive within the slots the blending,blades 344. Similarly the lids 336 are arranged for stacking one on top of the other. The containers are also stackable one inside the other with the upper ends of the hollow portions 340 engaging through the lower openings 341 of adjacent containers when so stacked. The upper edge of each container engages below the shoulder 334 of a container when stacked. Such stackability insures that the component parts are able to be transported taking up minimum volume after manufacture and during transportation to an assembly location and can be utilised in filling machines at which the containers need to be denested.

The containers are taken to an assembly and filling location where product is introduced into the containers through their upper ends to reach a predetermined desired level within the container. Before filling the blending element 343 is located over the hollow portion 340. After filling the film (if present) is located over the upper opening to seal the opening and the lid 336 (if used) is applied over the upper edge 335 of the container. If desired a seal may also be applied to the lower base of the container to seal the opening 341 and such seal may be heat sealed and in a similar form to the film over the upper end of the container. The lower seal may be necessary if sterile/UHT/aseptic product is used. Such productmay utilise the introduction of hot product into the container and may be transported at ambient temperatures. At a dispensing location the containers may be located in a freezer at the intended consumption temperature. Such containers may not require any heating function prior to blending.

Filled and sealed containers may be cooled or frozen to the desired storage temperature. In the present case the apparatus described for blending is assumed to be dealing with frozen product within the containers, such product needing to be brought up to a blending and dispensing temperature but the container may also be used in alternative apparatus without a heating function being required.

The filled and cooled/frozen containers of product may be stored and transported to the point of blending and consumption. Such storage will be at the desired temperature in a refrigerated environment.

When it is required to consume product within the container it is removed from its refrigerated environment and, when employing the apparatus of Figs 43-46, it is heated and blended for consumption. The lid 313 is moved to an open position using the handle 314 or by power means to reveal the upper opening 312. The container is inserted through the opening 312 into the housing 311 and the support member 324 is located into the hollow portion 340 of the container. In this position the drive element 321 is in driving engagement with the driven member 345 of the element 343.

In order to secure the container against movement relative to the support member 324 the lower end of the hollow portion 340 is shaped at 348 to locate with a correspondingly shaped part of the support member 324. For example the parts may be of complimentary square, hexagonal or other shape.

Alternatively the outer profile of the container may be shaped for fixed locating in the housing, or the inner profile shaped for the same reason.

After loading into the housing 311 the lid 313 is moved to a closed position across the opening 312 and heating of product within the container can take place. Microwave radiation from the magnetrons 329 and wave guide means 330 is directed into the housing 311 for a predetermined timed duration. The duration and power of the microwave energy is determined according to the initial temperature of product within the container, the amount of product within the container, the nature of product within the container, and the desired final temperature of product within the container. Such duration and power of the microwave energy may be determined automatically upon reading data on the container and by reading the initial temperature of the container or by 'testing' the product hardness, as previously described. Such data may also prevent operation of the apparatus should the container and its contents not meet the desired parameters, for example if a product has passed its "sell by" date, the container is not filled with product, or other parameters. Once the desired heating of product in the container has been attained the drive motor 317 is operated to rotate the blending element 343 to blend the product. This action makes the product ready for consumption either from the container, or after it has been transferred to another container. Access of product directly from the container may be through an opening 350 in the lid of the container which may be, for example, a frangible opening for a straw.

In the assembly of the blending element 343 with the container the driven member 345 may be located in the seating 342 as a force fit and a seal moulded into the seating 342, preferably in the form of a liquid seal. Thus although the upper end of the hollow member 340 may be above the level ofproduct within the container it is preferred that there is a seal between the member 340 and the element 343.

The container described may be used independently of the microwave heating arrangement, especially if the food product is already at the desired blending temperature. It is intended that the container and the blending element be disposed of after blending and consumption of the product. Access to the product in the container after blending may be through the lid 336 and the seal (if present) using a straw. Alternatively the lid 336 may be removed and access is through the seal. However, the lid and the seal can both be removed for consumption of product or the product may be poured into another container, for example a reusable glass container, or a fresh lid may be fitted.

Sauces and other additives can be made to the container prior to, during or after blending, if required. Such additions will usually be through the lid and seal.

The container may be in different sizes according to the product contained or individual customer requirements. To achieve different sizes the drive arrangement may remain the same size with the height and/or diameter of the container being changed. In some cases the base of the container may be clear of the base of the housing with the container supported on the support member 324. The container is provided over its internal surface with ribs 351 which project inwardly into the body of the container and which extends longitudinally from its lower end towards its upper end. Such ribs 351 assist in agitating and blending product within the container during ablending operation to improve the blending action. The spacing and depth of the ribs 351 may be selected according to the nature of the product, the form of blending means and the speed of rotation of such blending means but the ribs may be omitted.

The product may be frozen carbonated product or beverage in which carbon dioxide is introduced into the product at or after filling into the container and the product is then frozen to retain the gas within the product. Product flavours may be added to the product at the point of sale i.e. during blending and dispensing, as described. The product may alternatively be aerated at the blending stage.

It will be appreciated that the blending action may have the effect of incorporating air into the product, the amount of added air being known as "overrun". For example the blending operation may result in a volume of product which is twice that prior to blending in which case the container may be only half full at the commencement of blending and becomes full by incorporating air from the remaining volume of the container into the product during the blending operation. The intended overrun is predetermined and the product quantity within the container is selected accordingly. In order to give the desired overrun it may be desirable to incorporate into the product a foaming agent. However if the product is to be heated to a relatively high temperature, for hot product, it is unlikely that air will be incorporated into the product at the filling stage. Carbonated products may be required which replicate product which is injected with carbon dioxide at the dispensing location. In order to avoid having to inject such carbon dioxide carbonation may be achieved in other ways. For example a form of carbonisation may be achieved by locating discretely within the container components which give rise to the production of carbon dioxide when brought together. Alternatively the components may be added at the point of dispensing. Such products may be a citrus acid component and a sodium carbonate component which, when mixed, produce carbon dioxide.

One way in which the carbon dioxide can be produced at the right time is to encapsulate one or both components within, for example, a fat product which melts at a predetermined temperature. Upon release of the products the interaction to produce carbon dioxide will take place. Alternatively the container could be divided by a barrier layer within the container which inhibits mixing of the components until the blending process takes place. This may be in the form of a layer of fat or other product which separates the components until the barrier is broken down. Instead of using encapsulation employing a meltable material the encapsulating product may be broken down by the action of the blending blades.

As a further alternative the components may be introduced into the container before, during or after the blending process, the components being in liquid or powder form.

## Claims

1. A method of blending food product in a container in which:
the container is charged with food product which is cooled to a storage temperature,
the container is fitted with a blending element located in the container,
a closure member is applied to the top of the container to seal the container,
the container is located in a blending position,
the food product is subjected to microwave energy to bring the food product from the storage temperature to the desired temperature for blending, in said blending position,
the blending element is releasably located in driving engagement with a drive motor extending through and adjacent to the closure member to blend the food product in the container,
and the blended food product is dispensed from the container.

2. A method according to Claim 1 wherein the microwave energy is directed outwardly from an internal region of the container.

3. A method according to Claim 1 or 2 wherein the container and the drive are relatively moved to engage and disengage drive to the blending element.

4. A method according to Claim 1, 2 or 3 wherein the drive is releasably connected to the blending element by engagement from an end of the container, through the closure member, and into engagement with the blending element within the container, such drive engagement occurring upon engagement of the container with apparatus by which the container is located and held during heating and blending.

5. A method according to any one of claims 1-4 wherein the microwave energy is directed outwardly from antennae means located in a location member extending through food product in the container.

6. A method according to any one of claims 1-5 wherein the container is filled with product which is frozen, the container of frozen product is transported to a dispensing location at which the product is heated and blended for the customer to consume out of the container.

7. A method according to any one of claims 1-6 in which the food product includes components to generate carbonation within the product.

8. A method according to any one of claims 1-7, wherein the container is held against rotation when the drive motor is operated to effect a blending operation.

9. A method according to any one of claims 1-8 wherein the microwave energy is directed from at least two different directions towards the container and its food contents.

10. A method according to any one of claims 1-9, wherein the blending element is formed as an integral part of the container.

11. A method according to claims 1-10 wherein, as a unit, the blending element and the container are disengaged and removed from the drive motor.

12. Blending apparatus for blending food product comprising:
a container chargeable with food product, the food product being coolable in the container to a storage temperature,
a blending element fitted to the container within the container,
a closure member arranged to be applied to the container to seal the container,
an assembly of the container, the blending element and the closure member comprising a container assembly,
a support for the container assembly including a drive motor drivingly engageable with the blending element through the closure member,
and microwave heating means,
whereby the assembly is locatable on the support in a blending position and, in said position, the microwave heating means in operable to heat the food product to bring it from the storage temperature to a blending temperature,
and the food product is blended in the container by operation of the blending element in said position,
and the assembly is removable from the support for dispensing of food product.

13. Apparatus according to claim 12 wherein the microwave heating means is arranged to direct microwave energy outwardly from a internal region of the container by provision of an internal antennae means.

14. Apparatus according to claim 12 or 13 wherein the drive motor is drivingly connected to the blending element by location of a drive shaft from the motor through the closure member to driving engagement with the blending element within the container, such engagement occurring after placing the assembly on the support.

15. Apparatus according to any one of claim 12-14 wherein the container is charged with carbonation product prior to blending.

16. Apparatus according to any one of claims 12-15 comprising holding means for holding the container during blending.

17. Apparatus according to any one of claims 12-16 comprising microwave generation means located to direct microwave energy towards the container from at least two different directions when in the blending position.

18. Apparatus according to any one of claims 12 - 17 wherein the blending position is located adjacent a refrigerated storage unit for containers and the containers are delivered to such position from the unit.

19. Apparatus according to a any one of claims 12 - 18 wherein there are provided two compartments for heating product in the containers wherein as one compartment is used for heating the other is used for dispensing.
